# EUROPÄISCHE PATENTSCHRIFT

(11) **EP 2 751 788 B1**
(45) Veröffentlichungstag und Bekanntmachung des Hinweises auf die Patenterteilung: **10.10.2018**
(21) Anmeldenummer: 12766875.4
(22) Anmeldetag: 30.08.2012
(51) Int. Cl.: G07C 9/00, B60K 28/06, G08B 21/06

(54) **VORRICHTUNG ZUR EINSTELLUNG WENIGSTENS EINES BETRIEBSPARAMETERS WENIGSTENS EINES FAHRZEUGSYSTEMS EINES KRAFTFAHRZEUGS**
DEVICE FOR SETTING AT LEAST ONE OPERATING PARAMETER OF AT LEAST ONE VEHICLE SYSTEM IN A MOTOR VEHICLE
DISPOSITIF POUR RÉGLER AU MOINS UN PARAMÈTRE DE FONCTIONNEMENT D'AU MOINS UN SYSTÈME D'UN VÉHICULE À MOTEUR

(30) Priorität: 02.09.2011 DE 102011112371
(43) Veröffentlichungstag der Anmeldung: 09.07.2014
(73) Patentinhaber: Audi AG, 85045 Ingolstadt (DE)
(72) Erfinder: SIEGEL, Andreas, 85049 Ingolstadt (DE); REICHEL, Michael, 85049 Ingolstadt (DE)
(74) Vertreter: Brandt, Kai
(86) Internationale Anmeldenummer: PCT/EP2012/003637
(87) Internationale Veröffentlichungsnummer: WO 2013/029787

(56) Entgegenhaltungen:
- EP-A1- 1 972 511
- EP-A1- 2 314 806
- FR-A1- 2 798 691
- US-B2- 7 792 328

## Beschreibung

Die Erfindung betrifft eine Vorrichtung zur Einstellung wenigstens eines Betriebsparameters wenigstens eines Fahrzeugsystems eines Kraftfahrzeugs.

Vorrichtungen zur Einstellung wenigstens eines Betriebsparameters wenigstens eines Fahrzeugsystems eines Kraftfahrzeugs sind an und für sich bekannt und in modernen Kraftfahrzeugen in wenigstens einfacher Ausführung grundsätzlich vorhanden. Über entsprechende Vorrichtungen werden üblicherweise Steuerinformationen erzeugt, welche an unterschiedliche kraftfahrzeugseitig vorgesehene Fahrzeugsysteme respektive diesen zugehörige Steuereinrichtungen übertragen werden und dort Einstellungen respektive Änderungen von Betriebsparametern herbeiführen. Derart ist es beispielsweise möglich, Einstellungen eines als Längsführungssystem ausgebildeten Fahrerassistenzsystems, wie etwa einen zu einem vorausfahrenden Fahrzeug einzuhaltenden Abstand, vorzunehmen.

Bisher ist es hierzu üblicherweise vorgesehen, dass zur Erzeugung entsprechender Steuerinformationen respektive zur Vornahme von Einstellungen beziehungsweise Änderungen eines entsprechenden Betriebsparameters Betätigungselemente manuell betätigt werden müssen. Exemplarisch sei in diesem Zusammenhang auf entsprechende Dreh-/Drücksteller verwiesen, über welche eine Vielzahl an Betriebsparametern unterschiedlicher Fahrzeugsysteme einstellbar ist.

Dabei kann die Handhabung entsprechender Betätigungselemente und somit die Anpassbarkeit entsprechender Betriebsparameter entsprechender Fahrzeugsysteme, insbesondere für damit unerfahrene, Personen schwierig und aufwendig sein, so dass ein Bedarf besteht, entsprechende Einstellungen entsprechender Betriebsparameter und entsprechender Fahrzeugsysteme auf einfachere und insbesondere intuitivere Weise durchführen zu können. DE 101 06 400 A1 betrifft ein Zugangskontrollsystem zu einem Kraftfahrzeug, bei welchem ein Transponder ein Codewort an ein Steuergerät sendet. Um eine Verschwendung von Energie zu vermeiden, soll ein Betätigungselement nur dann betätigt werden, wenn kraftfahrzeugseitige Bewegungssensoren ein dem Betätigungselement zugeordnetes Betätigungsmuster detektieren.

DE 101 05 060 A1 betrifft ein weiteres derartiges Zugangskontrollsystem, bei dem eine Erhöhung der Sicherheit ermöglicht werden soll. Hierzu umfassen sowohl das Kraftfahrzeug als auch der Transponder Bewegungssensoren, deren Bewegungsmuster verglichen wird, wobei nur bei Übereinstimmung der Bewegungsmuster der Kommunikationskanal zur Berechtigungsüberprüfung freigegeben wird. EP 2 314 806 A1 offenbart eine Vorrichtung, bei der in einem Kfz-Schlüssel ein Bewegungssensor integriert ist, wobei der Bewegungssensor ausgelegt ist, um eine Bewegung des Kfz-Schlüssels zu erfassen und daraus Bewegungsdaten zu gewinnen, welche in einem Speicher des Kfz-Schlüssels aufgezeichnet werden und über eine Schnittstelle an ein externes Gerät ausgegeben werden können. Die Bewegungen eines Kfz-Benutzers werden so aufgezeichnet und von einer Kfz-Steuereinrichtung genutzt, um Steueraufgaben durchzuführen.

Der Erfindung liegt sonach das Problem zugrunde, eine Vorrichtung zur Einstellung wenigstens eines Betriebsparameters wenigstens eines Fahrzeugsystems eines Kraftfahrzeugs hinsichtlich der Bedienbarkeit beziehungsweise Anpassbarkeit entsprechender Betriebsparameter zu verbessern.

Das Problem wird erfindungsgemäß durch eine Vorrichtung der eingangs genannten Art mit den Merkmalen des Anspruchs 1 gelöst.

Erfindungsgemäß wird eine Vorrichtung zur Einstellung wenigstens eines Betriebsparameters wenigstens eines Fahrzeugsystems eines Kraftfahrzeugs vorgeschlagen, bei der Einstellungen beziehungsweise Änderungen entsprechender Betriebsparameter intuitiv über Bewegungen einer Person vornehmbar sind. Unter Bewegungen können hierbei bewusst durchgeführte Bewegungen, das heißt insbesondere Gesten, als auch unbewusst durchgeführte Bewegungen einer Person verstanden werden. Die Bewegungen werden über eine personenseitige, das heißt der jeweiligen Person zugeordnete, deren Bewegungen erfassende Bewegungssensorik in Form von personenspezifischen Bewegungssignalen erfasst und an eine der Vorrichtung zugehörige Bewegungserfassungseinrichtung übermittelt, welche Bewegungserfassungseinrichtung die personenspezifischen Bewegungssignale in personenspezifische Bewegungsinformationen umwandelt. Nach Auswertung beziehungsweise Interpretation der personenspezifischen Bewegungsinformationen, welche sonach eine bestimmte Bewegung oder auch Bewegungsfolge einer Person abbilden, nimmt die erfindungsgemäße Vorrichtung gegebenenfalls bestimmte Einstellung bestimmter Betriebsparameter bestimmter Fahrzeugsysteme des Kraftfahrzeugs vor. Das erfindungsgemäße Prinzip erlaubt sonach eine besonders einfache und intuitive Einstellung beziehungsweise Anpassung entsprechender Betriebsparameter über von der Person durchgeführte Bewegungen beziehungsweise Gesten.

Das erfindungsgemäße Prinzip lässt sich anhand der nachfolgenden Beispiele erläutern. In einem ersten Beispiel führt eine mit einer personenseitigen Bewegungssensorik ausgestattete, außerhalb eines verriegelten Kraftfahrzeugs, das heißt im Umfeld des Kraftfahrzeugs befindliche Person zum Beispiel mit dem rechten Arm eine bestimmte Bewegung, zum Beispiel eine Kreisbewegung, durch. Denkbar ist auch, dass die Person mit der rechten Hand ihre Unterschrift in die Luft zeichnet. Die von der Person durchgeführte Bewegung beziehungsweise Gestik wird von der Bewegungssensorik erfasst, in personenspezifische Bewegungssignale umgewandelt, welche personenspezifischen Bewegungssignale an die Bewegungserfassungseinrichtung übermittelt und dort in eine personenspezifische Bewegungsinformation umgewandelt werden. Die personenspezifische Bewegungsinformation enthält sonach ein Abbild der von der Person durchgeführten Bewegung. Nach Auswertung beziehungsweise Interpretation der die von der Person tatsächlich durchgeführten Bewegung beziehungsweise Geste enthaltenden personenspezifischen Bewegungsinformation wird ein Fahrzeugsystem etwa in Form eines als Zentralverriegelung ausgebildeten Entriegelungssystems derart angesteuert, dass das Kraftfahrzeug entriegelt wird. Gegebenenfalls kann zusätzlich eine Plausibilisierung über die Erfassung eines Schlüssels durchgeführt werden, so dass eine entsprechende auf einer Bewegung beziehungsweise Geste basierende Entriegelung des Kraftfahrzeugs beispielsweise nur durch den Träger des dem Kraftfahrzeug zugehörigen Schlüssels vornehmbar ist.

Anhand des ersten Beispiels zeigt sich auch, dass das erfindungsgemäße Prinzip in sicherheitstechnischer Hinsicht Vorteile aufweist, da etwa sich Personen ohne berechtigten Besitz des Schlüssels ohne Kenntnis der zum Betätigen des Entriegelungssystems erforderlichen bestimmten Bewegung beziehungsweise Geste keinen Zugang in das Fahrzeuginnere verschaffen können. Zusätzlich müssten diese über eine personenseitige Bewegungssensorik verfügen, welche entsprechende auf der bestimmten Bewegung beziehungsweise Geste basierende Bewegungssignale an die Bewegungserfassungseinrichtung übermittelt. Insgesamt ist der Besitz des Schlüssels sonach ohne Kenntnis entsprechender, zur Entriegelung des Kraftfahrzeugs notwendiger Bewegungen beziehungsweise Gesten im Hinblick auf einen Zugang in das Fahrzeuginnere nutzlos.

In einem zweiten Beispiel hat eine Person auf dem Fahrersitz des Kraftfahrzeugs Platz genommen. Durch eine Bewegung zum Beispiel des linken Arms von oben nach unten werden wiederum über die personenseitige Bewegungssensorik personenspezifische Bewegungssignale erzeugt, an die Bewegungserfassungseinrichtung übermittelt und von dieser in eine entsprechende Bewegungsinformation umgesetzt. Die Bewegungsinformation wird ausgewertet beziehungsweise interpretiert und zum Beispiel zur Einstellung eines fahrerseitigen Fensterbetätigungssystems verwendet, woraufhin sich das fahrerseitige Fenster öffnet. Eine Betätigung eines bekannten schalterartigen Betätigungselements ist somit zum Öffnen und selbstverständlich auch zum Schließen des Fensters nicht notwendig, wenngleich ein entsprechendes Betätigungselement jedoch trotzdem vorhanden sein kann. Auch hier kann gegebenenfalls eine Plausibilisierung der mit der Bewegung verbundenen Einstellung des Betriebsparameters, welche Plausibilisierung zum Beispiel über eine zeitnah oder zeitgleich mit der Bewegung vorgenommene Spracheingabe, etwa durch Aussprache des Wortes "Fenster" oder durch Betätigung eines Betätigungselements, erfolgen kann, durchgeführt werden.

Als drittes Beispiel sei der Zugriff auf eine beziehungsweise die Auswahl einer Information aus einem kraftfahrzeugseitig installierten Adressbuch oder die Eingabe einer Telefonnummer in ein kraftfahrzeugseitig vorhandenes Kommunikationssystem genannt. Entsprechende Eingaben oder Auswahlen können mit dem erfindungsgemäßen Prinzip durch einfache Bewegungen der Person respektive bestimmter Körperteile der Person ausgeführt werden. Eine Telefonnummer oder der Name einer zu kontaktierenden Person kann in die Luft geschrieben werden. Selbstverständlich können derart auch Einstellungen eines Navigationssystems, etwa die Eingabe eines Zielorts oder dergleichen beispielsweise durch entsprechende Bewegungen, das heißt insbesondere ein Schreiben eines Zielorts in die Luft, schnell und einfach vorgenommen werden.

Die Auswertung beziehungsweise Interpretation der personenspezifischen Bewegungsinformationen kann beispielsweise durch Abfragen des Speichermittels erfolgen, in welchem zu bestimmten von einer Person durchgeführten Bewegungen beziehungsweise Gesten entsprechende Steuerinformationen bestimmter Betriebsparameter entsprechender Fahrzeugsysteme zugeordnet beziehungsweise zuordenbar sind. Mithin ist es zweckmäßig, wenn die erfindungsgemäße Vorrichtung zur Zuordnung einer auf einer bestimmten Geste einer Person basierenden personenspezifischen Bewegungsinformation zu einer bestimmten Einstellung eines Betriebsparameters eines Fahrzeugsystems ausgebildet ist.

Dabei ist es denkbar, dass eine entsprechende Zuordnung bereits werkseitig vorgenommen wurde, jedoch bedienerseitig, etwa im Rahmen eines hierfür vorgesehenen Lernmodus der Vorrichtung, in dem ein Bediener bestimmte Gesten mit bestimmten Einstellungen bestimmter Fahrzeugsysteme verknüpft, individuell anpassbar beziehungsweise erweiterbar ist. Bei mehreren Personen können personenspezifische Profile angelegt werden, so dass für unterschiedliche Personen, welche vorher selbstverständlich mit der Vorrichtung registriert sein müssen, worauf später noch eingegangen werden soll, unterschiedliche Bewegungen beziehungsweise Gesten zu unterschiedlichen Einstellungen unterschiedlicher Betriebsparameter unterschiedlicher Fahrzeugsysteme führen.

Unter einem Kraftfahrzeug im erfindungsgemäßen Sinne sind nicht allein Landkraftfahrzeuge, wie zum Beispiel Personenkraftwagen, Lastkraftwagen, Transportfahrzeuge wie Busse, Motorräder etc. zu verstehen. Der Begriff "Kraftfahrzeug" bezieht sich grundsätzlich auch auf Wasser- und/oder Luftfahrzeuge.

Eine personenseitige Bewegungssensorik umfasst zweckmäßig wenigstens einen Inertialsensor. Inertialsensoren dienen der Erfassung translatorischer und/oder rotatorischer Geschwindigkeiten (Rotationsgeschwindigkeiten bzw. Drehraten). In Abhängigkeit der die Bewegungssensorik bildenden Inertialsensoren lassen sich sonach Bewegungen beziehungsweise Gesten einer Person hoch aufgelöst in entsprechenden personenspezifischen Bewegungssignalen darstellen. Insbesondere ist es möglich, Geschwindigkeiten bzw. Beschleunigungen in sechs Freiheitsgraden, das heißt drei translatorischen und drei rotatorischen Freiheitsgraden, aufzunehmen, wenn die Bewegungssensorik eine entsprechende Anzahl an Inertialsensoren aufweist.

Bevorzugt ist die personenseitige Bewegungssensorik körpernah benachbart zu der jeweiligen Person, insbesondere an oder benachbart zu einem Körperteil der Person, angeordnet oder anordenbar. Durch die insbesondere unmittelbare Anordnung der personenseitigen Bewegungssensorik am Körper der Person sind Bewegungen beziehungsweise Gesten der Person mit hoher Genauigkeit erfassbar. Hierbei empfiehlt es sich, die personenseitige Bewegungssensorik am oder im Bereich von üblicherweise zur Durchführung von Gesten verwendeten, das heißt in der Regel möglichst vielfältig bewegbaren Körperteilen anzuordnen. Hierzu zählt beispielsweise der Bereich des Unterarms respektive des Handgelenks oder des Kopfes.

Es ist denkbar, dass die personenseitige Bewegungssensorik in ein Mobiltelefon und/oder einen Schlüssel und/oder eine Brille und/oder einen Stift und/oder ein Kleidungsstück und/oder eine Uhr und/oder ein Schmuckstück der Person integriert und/oder mit einem Mobiltelefon und/oder einem Schlüssel und/oder einer Brille und/oder einem Stift und/oder einem Kleidungsstück und/oder einer Uhr und/oder einem Schmuckstück verbunden ist. Mithin ergibt sich eine Vielzahl an unterschiedlichen Möglichkeiten der Anordnung einer entsprechenden Bewegungssensorik, welche durch die vorstehende Aufzählung keinesfalls abschließend ist. Neben der Integration in ein Mobiltelefon beziehungsweise allgemein in ein mobiles Endgerät, worunter auch, insbesondere tragbare, Multimediaeinrichtungen wie MP3-Abspielgeräte oder dergleichen fallen, kann eine Bewegungssensorik auch an jedweden anderen, an einem Körperteil einer Person zu tragenden Gegenstand integriert oder mit diesem verbunden sein. Neben den bereits genannten Brillen sind zum Beispiel auch Hörgeräte zu nennen. Schlüssel, Schlüsselanhänger, Stifte, Visitenkarten, Etuis, tragbare Speichermittel, wie zum Beispiel USB-Sticks etc., welche ebenso in der Regel körpernah getragen werden, können ebenso mit einer Bewegungssensorik versehen sein. Kleidungsstücke, worunter auch am Körper oder körpernah getragene Accessoires wie Uhren, Schmuck oder dergleichen zusammenzufassen sind, können ebenso mit einer Bewegungssensorik versehen sein.

In vorteilhafter Ausführungsform der Erfindung ist es vorgesehen, dass die Vorrichtung ferner zur Ermittlung einer den körperlichen Zustand, insbesondere den Wachheitsgrad und/oder Aufmerksamkeitsgrad, der Person betreffenden Information und/oder einen Fahrertyp der Person klassifizierenden Information aus der personenspezifischen Bewegungsinformation und zur Berücksichtigung der den körperlichen Zustand der Person betreffenden Information und/oder der den Fahrertyp der Person klassifizierenden Information bei der Einstellung des wenigstens einen Betriebsparameters des wenigstens einen Fahrzeugsystems ausgebildet ist. Hierbei werden demnach die auf Bewegungen, worunter insbesondere von der Person nicht bewusst im Hinblick auf eine vorzunehmende Einstellung eines Betriebsparameters eines Fahrzeugsystems vorgenommene Bewegungen fallen, basierenden personenspezifischen Bewegungssignale respektive die daraus ermittelten personenspezifischen Bewegungsinformationen auch zur Einschätzung eines körperlichen Zustands der Person respektive zur Klassifizierung des Fahrertyps der Person verwendet. Der körperliche Zustand, welcher etwa eine Aussage darüber beinhaltet, wie wach und körperlich leistungsfähig oder müde und körperlich angeschlagen eine Person ist, respektive die Klassifizierung der Person in einen speziellen Fahrertyp, welche etwa eine Aussage darüber enthält, ob es sich um einen defensiven oder offensiven Fahrertyp handelt, wird bei der Einstellung entsprechender Betriebsparameter entsprechender Fahrzeugsysteme berücksichtigt. Hierbei handelt es sich vorzugsweise um eine seitens der erfindungsgemäßen Vorrichtung automatisch durchgeführte Einstellung entsprechender Betriebsparameter entsprechender Fahrzeugsysteme, welche beispielsweise zum Ziel haben kann, eine körperlich angestrengte Person durch geeignete, über Einstellungen geeigneter Betriebsparameter geeigneter Fahrzeugsysteme durchführbare Maßnahmen zu entspannen. Diese erfindungsgemäße Ausführungsform bezieht sich vornehmlich auf die Einschätzung des körperlichen Zustands respektive die Klassifizierung des Fahrertyps des Fahrers des Kraftfahrzeugs. Die Erkennung einer bestimmten Person als Fahrer wird über eine bestimmte, weiter unten näher erläuterte Registrierung einer Person mit der Vorrichtung vorgenommen.

Unter einer den körperlichen Zustand einer Person betreffenden Information ist auch ein Aufmerksamkeits- bzw. Ablenkungsgrad zu verstehen, anhand welchem Rückschlüsse auf die Aufmerksamkeit respektive Ablenkung einer Person ziehbar sind. Beispielsweise kann anhand der personenspezifischen Bewegungsinformation erkannt werden, ob sich eine als Fahrer agierende Person zur Seite oder in Richtung des Fonds des Kraftfahrzeugs neigt bzw. bewegt, was regelmäßig einen Hinweis auf eine Unaufmerksamkeiten bzw. Ablenkungen der Person gibt.

Eine im Bereich des Oberkörpers der Person angeordnete personenseitige Bewegungssensorik kann beispielsweise gleichermaßen Kenntnisse über physiologische Vorgänge, insbesondere betreffend die Atmung, den Puls etc. liefern, welche eine Einschätzung bzw. Einstufung des körperlichen Zustands der Person zulassen. Beispielsweise kann eine über die Bewegungssensorik ermittelte schnelle Atmung beziehungsweise hohe Pulsfrequenz auf eine körperlich angestrengte beziehungsweise belastete Person hinweisen, was dazu führt, dass die Vorrichtung eine diesem entgegenwirkende Anpassung bestimmter Betriebsparameter bestimmter Fahrzeugsysteme vornimmt. So kann in entsprechenden Fällen über die erfindungsgemäße Vorrichtung zum Beispiel eine üblicherweise als entspannend empfundene Einstellung einer Innenraumbeleuchtung oder eine Lautstärkeanpassung eines Multimediasystems vorgenommen werden.

Durch die hochauflösende Erfassung auch kleinerer Bewegungen einer Person mittels der personenseitigen Bewegungssensorik kann gegebenenfalls sogar, insbesondere über eine Frequenzanalyse der personenspezifischen Bewegungsinformation, ein Zittern einer Person, zum Beispiel bei Nutzung eines Touchpads, erkannt und daraus Rückschlüsse auf den körperlichen Zustands, das heißt insbesondere auf die Anspannung und Müdigkeit, der Person gezogen werden. Gleichermaßen kann das Zittern einer Person Hinweise auf einen besonders nervösen Fahrstil geben, so dass hierüber auch eine Klassifizierung eines Fahrertyps ableitbar ist.

Grundsätzlich können durch die Ermittlung des körperlichen Zustands der Person respektive die Klassifizierung der Person in einen Fahrertyp bestimmte Fahrzeugsysteme, insbesondere Fahrerassistenzsysteme, effizienter genutzt und beispielsweise Falsch- beziehungsweise Frühauslösungen zum Beispiel automatisch durchgeführter Bremsvorgänge, etwa wenn vorher ermittelt wurde, dass der Fahrer wach und leistungsfähig ist, reduziert beziehungsweise verhindert werden.

In einer konkreten Ausführungsform ist es möglich, dass die Vorrichtung zur Ermittlung der den körperlichen Zustand, insbesondere den Wachheitsgrad und/oder Aufmerksamkeitsgrad, der Person betreffenden Information und/oder der den Fahrertyp der Personklassifizierenden Information anhand der personenspezifischen Bewegungsinformation aus dem beim Einsteigen der Person in das Kraftfahrzeug gelieferten personenspezifischen Bewegungssignal ausgebildet ist. Steigt eine Person sonach schnell und agil in das Kraftfahrzeug ein respektive bewegt sich schnell und agil auf das Kraftfahrzeug zu, kann über die aus der Bewegung resultierenden personenspezifischen Bewegungssignale und die daraus ermittelte personenspezifische Bewegungsinformation erkannt werden, dass es sich um eine wache, körperlich fitte Person handelt. Selbstverständlich können auch entsprechende Bewegungen einer innerhalb des Kraftfahrzeugs befindlichen Person Aufschlüsse über deren körperlichen Zustand geben respektive eine Klassifizierung des Fahrertyps erlauben. So lassen sich etwa über nervöse Bewegungen beziehungsweise schnell durchgeführte Gestiken der Person gegebenenfalls Hinweise auf einen aggressiven Fahrertyp ableiten.

In vorteilhafter Weiterbildung der Erfindung ist es möglich, dass die Vorrichtung ferner wenigstens eine kraftfahrzeugseitige Bewegungssensorik umfasst, wobei die Bewegungserfassungseinrichtung zur Ermittlung einer kraftfahrzeugspezifischen Bewegungsinformation anhand wenigstens eines von der kraftfahrzeugseitigen Bewegungssensorik gelieferten Kraftfahrzeugspezifischen Bewegungssignals und unter Berücksichtigung des kraftfahrzeugseitigen Bewegungssignals zur Ermittlung einer die Bewegung der Person relativ zu dem Kraftfahrzeug betreffenden relativen personenspezifischen Bewegungsinformation ausgebildet ist, wobei die Vorrichtung anhand der relativen personenspezifischen Bewegungsinformation zur Einstellung des wenigstens einen Betriebsparameters des wenigstens einen Fahrzeugsystems ausgebildet ist. Derart, das heißt über eine insbesondere kraftfahrzeugseitig fest installierte, kraftfahrzeugseitige Bewegungssensorik, lassen sich Bewegungen einer innerhalb des Kraftfahrzeugs befindlichen Person noch genauer erfassen, da störende Bewegungen des Kraftfahrzeugs, etwa bei Fahrt auf unebenem Untergrund oder über ein Schlagloch etc., von den Bewegungen der Person unterschieden und getrennt werden können. Insbesondere ist es möglich, seitens der kraftfahrzeugseitigen Bewegungssensorik erfasste Bewegungssignale von seitens der personenseitigen Bewegungssensorik erfasste Bewegungssignalen "abzuziehen", so dass Bewegungen des Kraftfahrzeugs quasi gefiltert werden und bei der Einstellung entsprechender Betriebsparameter entsprechender Fahrzeugsysteme nicht berücksichtigt werden. Die von der Bewegungserfassungseinrichtung ermittelte relative personenspezifische Bewegungsinformation bildet demnach Bewegungen beziehungsweise Gesten einer, insbesondere innerhalb des Kraftfahrzeugs befindlichen, Person relativ zum Kraftfahrzeug ab, so dass bei Einstellung entsprechender Betriebsparameter entsprechender Fahrzeugsysteme im Wesentlichen ausschließlich Bewegungen beziehungsweise Gesten der Person berücksichtigbar sind.

Die Bewegungserfassungseinrichtung kann in unterschiedlichen Bauteilen oder auf unterschiedliche Bauteile verteilt angeordnet sein. Erfindungsgemäß ist die oder eine oder ein Teil einer Bewegungserfassungseinrichtung in oder an der personenseitigen Bewegungssensorik angeordnet, wobei die Bewegungserfassungseinrichtung eine Sende- und/oder Empfangseinrichtung zur Übermittlung der personenspezifischen Bewegungsinformation an eine der Vorrichtung zugehörige Sende- und/oder Empfangseinrichtung umfasst, wobei die Sende- und/oder Empfangseinrichtungen zur drahtlosen Kommunikation, insbesondere über ein Drahtlosnetzwerk, ausgebildet sind. Die Bewegungserfassungseinrichtung kann sonach Teil eines die personenseitige Bewegungssensorik tragenden Gegenstands sein. In Anlehnung an die hierzu oben genannten Beispiele kann die Bewegungserfassungseinrichtung sonach beispielsweise samt der Bewegungssensorik in ein Mobiltelefon oder eine Brille integriert sein. Hierbei kann die in oder an der personenseitigen Bewegungssensorik angeordnete Bewegungserfassungseinrichtung in ihrer Funktion, das heißt der Ermittlung der personenspezifischen Bewegungsinformation, beschränkt sein, so dass diese zum Beispiel nur eine teilweise Ermittlung einer personenspezifischen Bewegungsinformation im Sinne einer Vorauswertung der personenspezifischen Bewegungssignale durchführt. In diesem Fall ist zweckmäßig eine weitere, die Endauswertung der personenspezifischen Bewegungssignale durchführende weitere Bewegungserfassungseinrichtung vorgesehen. Alternativ kann die Bewegungserfassungseinrichtung auch vorab wenigstens eine personenspezifische Bewegungsinformation ermitteln, welche an die kraftfahrzeugseitige Vorrichtung übertragbar ist respektive übertragen wird.

Alternativ oder gegebenenfalls zusätzlich kann die oder eine oder ein Teil der Bewegungserfassungseinrichtung innerhalb des Kraftfahrzeugs angeordnet sein, wobei die personenseitige Bewegungssensorik eine Sende- und/oder Empfangseinrichtung zur Übermittlung des personenspezifischen Bewegungssignals an eine der Bewegungserfassungseinrichtung zugehörige Sende- und/oder Empfangseinrichtung umfasst, wobei die Sende- und/oder Empfangseinrichtungen zur drahtlosen Kommunikation, insbesondere über ein Drahtlosnetzwerk, ausgebildet sind. Die Orte zur Anordnung der Bewegungserfassungseinrichtung können beliebig gewählt werden. Vorteilhaft erlaubt der Ort der Anordnung der Bewegungserfassungseinrichtung innerhalb des Kraftfahrzeugs eine einfache Anbindung an ein kraftfahrzeugseitig vorgesehenes Bussystem.

In allen Fällen kann das für die Kommunikation der jeweiligen Sende- und/oder Empfangseinrichtungen erforderliche Drahtlosnetzwerk etwa als WLAN- oder Bluetooth-Netzwerk ausgebildet sein. Andere Typen von Drahtlosnetzwerken sind selbstverständlich ebenso vorstellbar.

Die erfindungsgemäße Vorrichtung ist bei mehreren innerhalb des Kraftfahrzeugs und/oder des Umfelds des Kraftfahrzeugs befindlichen Personen zur Zuordnung unterschiedlicher Rollen zu den jeweiligen Personen und zur Berücksichtigung der zugeordneten Rollen bei der Einstellung des wenigstens einen Betriebsparameters des wenigstens einen Fahrzeugsystems ausgebildet. Dabei ist unter einer Rolle beispielsweise die Klassifizierung einer bestimmten Person als Fahrer und einer weiteren Person als Beifahrer möglich. Sonach sind von der die Rolle des Fahrers übernehmenden Person durchgeführte Bewegungen beziehungsweise Gesten im Hinblick auf damit verbundene Einstellungen von Fahrzeugsystemen anders auszuwerten beziehungsweise zu interpretieren als von der die Rolle des Beifahrers übernehmenden Person durchgeführte Bewegungen beziehungsweise Gesten. Selbstverständlich ist hierfür die Grundvoraussetzung, dass alle Personen mit einer entsprechenden personenseitigen Bewegungssensorik ausgestattet sind. Die Betriebssicherheit der erfindungsgemäßen Vorrichtung ist derart verbessert, da beispielsweise unbedachte Bewegungen eines Beifahrers nicht zu Einstellungen eines Betriebsparameters eines Fahrzeugsystems führen können, die dem Fahrer vorbehalten sind, das heißt von der Vorrichtung zum Beispiel nicht berücksichtigt werden. Hierzu zählen insbesondere Bewegungen, die zu Einstellungen fahrtrelevanter Betriebsparameter etwa eines Fahrerassistenzsystems führen würden, so dass bestimmte, etwa die Einstellung einer Zielgeschwindigkeit betreffende Bewegungen eines Fahrers, durchgeführt von einem Beifahrer, gerade keine Einstellung der Zielgeschwindigkeit herbeiführen.

Jedoch können bestimmte Bewegungen beziehungsweise Gesten des Beifahrers gezielt für eine Einstellung eines Betriebsparameters eines Fahrzeugsystems genutzt werden. Beispielsweise kann eine Bewegung eines mit einer entsprechenden Bewegungssensorik ausgestatteten Schuhs eines Beifahrers in Richtung einer Bodenplatte, wobei der Beifahrer quasi eine Betätigung eines beifahrerseitig nicht vorhandenen Bremspedals vornehmen will, für eine Betätigung beziehungsweise Aktivierung einer Notbremsfunktion eines Fahrerassistenzsystems berücksichtigt werden, so dass diese, gegebenenfalls nach Plausibilisierung mit dem Bremsverhalten des Fahrers, beispielsweise eine Vorkonditionierung einer Bremsanlage durchführt oder sogar insgesamt frühzeitiger betätigt beziehungsweise aktiviert wird. Mithin können bestimmte Bewegungen des Beifahrers bei der Beurteilung von Gefahrensituationen, insbesondere zur Vermeidung von Kollisionen, genutzt werden.

Die Zuordnung entsprechender Rollen zu unterschiedlichen Personen kann beispielsweise, sofern die Personen innerhalb des Kraftfahrzeugs befindlich sind, über eine Ortung der Person innerhalb des Kraftfahrzeugs, welche ebenfalls über die den Personen jeweils zugeordnete Bewegungssensorik respektive die von dieser gelieferten personenspezifischen Bewegungssignale, erfolgen kann, durchgeführt werden. Gegebenenfalls kann eine Zuordnung auch über eine bestimmte Funkfrequenz einer zwischen der Bewegungssensorik und der Bewegungserfassungseinrichtung oder der Vorrichtung bestehenden Funkverbindung erfolgen, so dass beispielsweise die personenseitige Bewegungssensorik einer als Fahrer zu definierenden Person über eine andere Funkfrequenz mit der Bewegungserfassungseinrichtung oder der Vorrichtung kommuniziert als eine personenseitige Bewegungssensorik einer als Beifahrer zu definierenden Person.

Es ist ferner möglich, dass die personenseitige Bewegungssensorik über eine personenspezifische Identifikationsinformation mit der Vorrichtung registrierbar ist. Die personenspezifische Identifikationsinformation dient der Anmeldung einer personenseitigen Bewegungssensorik an der Vorrichtung und weiter gegebenenfalls einer Zuordnung der von einer personenseitigen Bewegungssensorik gelieferten Bewegungssignale respektive der daraus ermittelten Bewegungsinformation zu einer bestimmten Person, so dass beispielsweise unterschieden werden kann, ob eine Person als Fahrer oder Bei- beziehungsweise Mitfahrer klassifiziert werden kann. Mithin kann sich eine Person respektive über eine dieser zugeordnete personenseitige Bewegungssensorik an der Vorrichtung über eine personenspezifische, das heißt individuelle Identifikationsinformation registrieren beziehungsweise anmelden, aus welcher personenspezifischen Identifikationsinformation hervorgeht, ob es sich bei der Person respektive von der Person durchgeführten Bewegungen um den Fahrer beziehungsweise Bewegungen des Fahrers handelt oder nicht. Dies kann im Weiteren ermöglichen, dass nach Registrierung und Erkennung der Person als Fahrer bestimmte, von dieser durchgeführte Bewegungen zu bestimmten Einstellungen bestimmter Betriebsparameter bestimmter Fahrzeugsysteme führen, welche bei Erkennung beziehungsweise Registrierung der gleichen Person als Beifahrer keine oder andere Einstellungen herbeiführen.

Die personenspezifische Identifikationsinformation kann in unterschiedlichen Formen vorliegen, das heißt die Registrierung der personenseitigen Bewegungssensorik mit der Vorrichtung kann auf unterschiedliche Weise erfolgen. Hierbei ist es zum Beispiel denkbar, dass eine Registrierung allein über die grundsätzliche Erkennung einer personenseitigen Bewegungssensorik in Verbindung mit einem Öffnen und Schließen der Fahrertür erfolgen kann, so dass, wenn eine personenseitige Bewegungssensorik erkannt wird und im Weiteren, gegebenenfalls innerhalb eines bestimmten Zeitintervalls, die Fahrertür geöffnet und geschlossen wird, eine Registrierung der erkannten Bewegungssensorik als dem Fahrer zugehörige Bewegungssensorik erfasst wird.

Denkbar ist auch, dass sich eine Person aktiv als Fahrer oder Beifahrer an der Vorrichtung anmeldet. Das heißt, es wird von der Person über die personenseitige Bewegungssensorik eine bestimmte Identifikationsinformation an die Vorrichtung übertragen, aus welcher diese erkennen kann, dass es sich hierbei um einen Fahrer oder Beifahrer handelt. Hierzu kann eine geeignete Software-Applikation seitens der Bewegungssensorik oder seitens des die Bewegungssensorik tragenden Gegenstands vorgesehen sein. Über die Software-Applikation wird sonach ein Signal erzeugt, welches eine entsprechende, eine Person als Fahrer oder Beifahrer klassifizierende Information enthält. Diese Ausführungsform eignet sich insbesondere für in mobilen Endgeräten (Mobiltelefon, PDA etc.) der Person integrierte oder mit diesen verbundene Bewegungssensoriken.

Sofern die personenseitige Bewegungssensorik in ein mit einer Kamera ausgestattetes mobiles Endgerät, insbesondere Mobiltelefon, integriert ist, kann es auch möglich sein, mit dieser bestimmte, etwa eine Person als Fahrer klassifizierende am oder im Kraftfahrzeug vorgesehenen Landmarken aufzunehmen und entsprechend eine Klassifizierung seitens des Mobiltelefons vorzunehmen, welche im Weiteren an die Vorrichtung zu übertragen ist und von dieser bei Einstellung entsprechender Betriebsparameter entsprechender Fahrzeugsysteme berücksichtigt wird.

In allen Fällen kann zusätzlich eine Plausibilisierung zweckmäßig sein, so dass zusätzlich beispielsweise abgefragt wird, ob die den Fahrer anzeigende Registrierung verifizierbar ist. Hierzu können beispielsweise Sitzbelegungssensoren oder innerhalb des Kraftfahrzeugs vorgesehene Kameras verwendet werden, welche nach erfolgter Registrierung einer personenseitigen Bewegungssensorik als Fahrer überprüfen, ob der Fahrersitz auch tatsächlich belegt ist respektive sich eine Person in dem vom Fahrer einzunehmenden Bereich befindet.

In einer bevorzugten Ausführungsform ist es vorgesehen, dass die personenspezifische Identifikationsinformation eine auf wenigstens einer bestimmten Geste der Person basierende personenspezifische Bewegungsinformation ist. Mithin kann eine bestimmte Bewegung respektive Geste einer Person als personenspezifische Identifikationsinformation zu deren Registrierung verwendet werden. So kann eine Person sich beispielsweise durch Zeichnen ihrer Unterschrift als Fahrer an der Vorrichtung anmelden, welche in dieser Ausführungsform selbstverständlich über ein Speichermittel verfügt, in welchem eine als Unterschrift identifizierbare Bewegungsinformation der als Fahrer zu erachtenden Person hinterlegt ist, so dass ein Abgleich der auf der durchgeführten Bewegung basierenden personenspezifischen Bewegungsinformation mit der in dem Speicher hinterlegten der Unterschrift entsprechenden personenspezifischen Bewegungsinformation durchführbar ist. Selbstverständlich sind andere Bewegungen beziehungsweise Gesten ebenso geeignet, eine Person als Fahrer oder Beifahrer zu registrieren.

Wie bereits erwähnt, kann die Vorrichtung wenigstens ein Speichermittel umfassen, in welchem personenspezifische Bewegungsinformationen ablegbar sind. Die im Speichermittel hinterlegten personenspezifischen Bewegungsinformationen können der Zuordnung aktueller personenspezifischer Bewegungsinformationen zu damit verbundenen bestimmten Einstellungen bestimmter Betriebsparameter entsprechender Fahrzeugsysteme dienen. Mithin kann eine kreisförmige Bewegung einer Person eine andere Einstellung eines anderen Betriebsparameters eines anderen Fahrzeugsystems bedeuten als eine geradlinige Bewegung. Gleichermaßen lassen sich personenspezifische beziehungsweise individuelle Bewegungsprofile und diesen zugehörige Zuordnungen zu bestimmten Einstellungen bestimmter Betriebsparameter bestimmter Fahrzeugsysteme in dem Speichermittel ablegen. Wie erwähnt, kann eine bestimmte Bewegung einer als Fahrer erkannten Person eine Einstellung eines anderen Betriebsparameters bewirken als die gleiche Bewegung einer als Beifahrer registrierten Person.

Ebenso ist es, insbesondere im Hinblick auf die oben genannte Ermittlung eines körperlichen Zustands, insbesondere eines Wachheitsgrads und/oder Aufmerksamkeitsgrads, und/oder einer Klassifizierung des Fahrertyps, aus einem Vergleich der in dem Speicher hinterlegten personenspezifischen Bewegungsinformationen mit aktuellen personenspezifischen Bewegungsinformationen möglich, Kenntnisse über den körperlichen Zustand mit der jeweiligen Person zu erlangen. Ist diese beispielsweise als Fahrer registriert, wobei mit dem Fahrer üblicherweise eine ein agiles Einsteigen in das Kraftfahrzeug anzeigende personenspezifische Bewegungsinformation verbunden ist, diese aber ausbleibt beziehungsweise langsam und schwerfällig ausfällt, kann ermittelt werden, dass der Fahrer müde und/oder körperlich beeinträchtigt ist.

Das wenigstens eine Fahrzeugsystem kann ein Fahrerassistenzsystem, insbesondere ein Multimediasystem und/oder ein Fahrwerkseinstellungssystem und/oder ein Längs- und/oder Querführungssystem, und/oder eine Klimaanlage und/oder ein Innenbeleuchtungssystem und/oder ein Betätigungssystem wenigstens einer Tür, eines Fensters, eines Verdecks und/oder wenigstens ein System zur Einstellung wenigstens einer Sitzposition sein. Die Aufzählung ist beispielhaft und nicht abschließend. Grundsätzlich kann die erfindungsgemäße Vorrichtung sämtliche in einem Kraftfahrzeug vorhandene Fahrzeugsysteme ansteuern und entsprechend diesen zugehörige Betriebsparameter einstellen, anpassen oder verändern.

Daneben betrifft die vorliegende Erfindung ein Verfahren zur Einstellung wenigstens eines Betriebsparameters wenigstens eines Fahrzeugsystems eines Kraftfahrzeugs nach Anspruch 14.

Das erfindungsgemäße Verfahren erlaubt es sonach, Betriebsparameter kraftfahrzeugseitig vorgesehener Fahrzeugsysteme über Bewegungen einer mit einer personenseitigen Bewegungssensorik ausgestatteten Person im Sinne einer Gestenbedienung entsprechender Fahrzeugsysteme einzustellen. Hierzu werden die Bewegungen von der personenseitigen Bewegungssensorik in entsprechende personenspezifische Bewegungssignale umgesetzt, welche personenspezifischen Bewegungssignale an die Bewegungserfassungseinrichtung übermittelt werden, welche aus den personenspezifischen Bewegungssignalen eine personenspezifische Bewegungsinformation erstellt. Anhand der personenspezifischen Bewegungsinformation nimmt die Vorrichtung zur Einstellung wenigstens eines Betriebsparameters wenigstens eines Fahrzeugsystems eine Einstellung eines entsprechenden Betriebsparameters vor. Wie im Weiteren noch erwähnt wird, lassen sich aus der personenspezifischen Bewegungsinformation auch Kenntnisse über den körperlichen Zustand, insbesondere den Wachheitsgrad und/oder Aufmerksamkeitsgrad, und/oder eine Klassifizierung des Fahrertyps einer Person ableiten.

Als zu den bezüglich der erfindungsgemäßen Vorrichtung genannten Beispielen ergänzendes Beispiel soll an dieser Stelle angeführt werden, dass eine Person beispielsweise durch eine bestimmte Fußbewegung, welche über die personenseitige Bewegungssensorik erfasst und in personenspezifische Bewegungssignale und weiter in eine personenspezifische Bewegungsinformation umgewandelt wird, das Öffnen einer Kofferraumtür möglich sein kann. Hierzu ist die auf der Fußbewegung der Person basierende personenspezifische Bewegungsinformation von der Vorrichtung einer entsprechenden Steuerinformation zum Ansteuern eines Kofferraumtürbetätigungssystems zugeordnet.

Grundsätzlich gelten zum erfindungsgemäßen Verfahren sämtliche Ausführungen zur erfindungsgemäßen Vorrichtung.

Als personenseitige Bewegungssensorik wird bevorzugt eine wenigstens einen Inertialsensor umfassende Bewegungssensorik verwendet. Diese ist zur Erfassung translatorischer und/oder rotatorischer Geschwindigkeiten bzw. Beschleunigungen einer Person ausgebildet und liefert sonach die Bewegung der Person betreffende, hoch aufgelöste personenspezifische Bewegungssignale.

Bevorzugt wird die im Rahmen des erfindungsgemäßen Verfahrens verwendete personenseitige Bewegungssensorik körpernah benachbart zu der jeweiligen Person, insbesondere an oder benachbart zu einem Körperteil der Person, angeordnet. Die entsprechend körpernahe Anordnung der personenseitigen Bewegungssensorik stellt sicher, dass entsprechende Bewegungen beziehungsweise Gesten der Person hinreichend genau von der personenseitigen Bewegungssensorik erfasst werden. Zweckmäßig wird die personenseitige Bewegungssensorik an besonders beweglichen beziehungsweise zur Durchführung einer Vielzahl von Bewegungen beziehungsweise Gesten geeigneten Körperteilen getragen.

Die im Rahmen des erfindungsgemäßen Verfahrens verwendete personenseitige Bewegungssensorik ist vorteilhaft in ein Mobiltelefon und/oder einen Schlüssel und/oder eine Brille und/oder einen Stift und/oder ein Kleidungsstück und/oder eine Uhr und/oder ein Schmuckstück der Person integriert. Denkbar ist es auch, die personenseitige Bewegungssensorik mit einem Mobiltelefon und/oder einem Schlüssel und/oder einer Brille und/oder einem Stift und/oder einem Kleidungsstück und/oder einer Uhr und/oder einem Schmuckstück zu verbinden. Grundsätzlich kann die personenseitige Bewegungssensorik in sämtliche, am Körper oder benachbart zu diesem getragene Gegenstände integriert sein.

Es ist denkbar, dass die Vorrichtung eine den körperlichen Zustand, insbesondere den Wachheitsgrad und/oder Aufmerksamkeitsgrad, der Person betreffende Information und/oder eine den Fahrertyp der Person klassifizierende Information aus der personenseitigen Bewegungsinformation ermittelt, wobei die den körperlichen Zustand der Person betreffende Information und/oder die den Fahrertyp der Person klassifizierende Information bei der Einstellung des wenigstens einen Betriebsparameters des wenigstens einen Fahrzeugsystems berücksichtigt wird. Die Ermittlung einer den körperlichen Zustand, insbesondere den Wachheitsgrad und/oder Aufmerksamkeitsgrad, der Person respektive einer den Fahrertyp der Person klassifizierenden Information aus der personenspezifischen Bewegungsinformation kann insbesondere über ein in einem der Vorrichtung zugehörigen Speichermittel abgelegtes personenspezifisches Bewegungsprofil erfolgen, so dass ein Vergleich, insbesondere der Dynamik beziehungsweise Agilität, bestimmter Bewegungen beziehungsweise Gesten einer Person mit diesen entsprechenden, in dem Speichermittel in Form von personenspezifischen Bewegungsinformationenhinterlegten Bewegungen beziehungsweise Gesten vorgenommen werden kann, so dass beispielsweise aus einer eine im Vergleich zu der in dem Speichermittel abgelegten personenspezifischen Bewegungsinformation eine aktuelle, eine langsamere Bewegung abbildende personenspezifische Bewegungsinformation, auf Müdigkeit oder körperliche Beeinträchtigung der Person hinweisen kann. Ein ebenfalls über die personenspezifische Bewegungsinformation abgebildetes Zittern oder wildes Bewegen bestimmter Körperteile kann Aufschlüsse darüber geben, dass es sich um einen offensiven beziehungsweise aggressiven Fahrertyp handelt.

Unter einer einen körperlichen Zustand einer Person betreffenden Information ist gleichermaßen auch ein Aufmerksamkeits- bzw. Ablenkungsgrad einer Person zu verstehen, welcher Rückschlüsse auf die Aufmerksamkeit respektive. Ablenkung einer Person erlaubt. Beispielsweise kann anhand der personenspezifischen Bewegungsinformation erkannt werden, ob sich eine als Fahrer agierende Person zur Seite oder in Richtung des Fond des Kraftfahrzeugs neigt bzw. bewegt, was regelmäßig einen Hinweis auf eine Unaufmerksamkeiten bzw. Ablenkungen der Person gibt. Insbesondere können aus der personenspezifischen Bewegungsinformation auch Hinweise auf die motorische respektive situative Ablenkung der jeweiligen Person abgeleitet werden.

Entsprechend der den körperlichen Zustand betreffenden respektive der den Fahrertyp der Person klassifizierenden Information erfolgt eine Einstellung wenigstens eines Betriebsparameters wenigstens eines Fahrzeugsystems. Beispielsweise kann eine Kollisionswarnung eines Kollisionswarnungssystems zeitlich vorgezogen beziehungsweise mit entsprechend deutlicheren Signalen ausgeführt werden, wenn ermittelt wurde, dass der Fahrer müde zu sein scheint. Diese Variante des erfindungsgemäßen Verfahrens betrifft grundsätzlich eine als Fahrer agierende Person. Dabei ist es bevorzugt, dass die Vorrichtung die den körperlichen Zustand, insbesondere den Wachheitsgrad und/oder Aufmerksamkeitsgrad, einer Person betreffende Information und/oder die den Fahrertyp der Person klassifizierende Information anhand der personenspezifischen Bewegungsinformation aus der beim Einsteigen der Person in das Kraftfahrzeug ermittelten personenspezifischen Bewegungsinformation ermittelt.

Es ist möglich, dass die Bewegungserfassungseinrichtung ferner eine kraftfahrzeugspezifische Bewegungsinformation anhand wenigstens eines von einer kraftfahrzeugseitigen Bewegungssensorik gelieferten kraftfahrzeugspezifischen Bewegungssignals ermittelt, wobei die Bewegungserfassungseinrichtung unter Berücksichtigung des kraftfahrzeugseitigen Bewegungssignals eine die Bewegung der Person relativ zu dem Kraftfahrzeug betreffende relative personenspezifische Bewegungsinformation ermittelt, und die Vorrichtung anhand der relativen personenspezifischen Bewegungsinformation eine Einstellung des wenigstens einen Betriebsparameters des wenigstens einen Fahrzeugsystems vornimmt. Es ist sonach möglich, durch Diskriminieren zwischen kraftfahrzeugspezifischen und personenspezifischen Bewegungen, insbesondere während der Fahrt, deutlichere Informationen über jeweilige Bewegungen beziehungsweise Gesten einer Person innerhalb des Kraftfahrzeugs zu erlangen, da kraftfahrzeugspezifische Bewegungen, etwa bedingt durch Fahren auf unebenem Untergrund, gefiltert und sonach bei der Einstellung entsprechender Betriebsparameter entsprechender Fahrzeugsysteme nicht berücksichtigt werden.

Die im Rahmen des erfindungsgemäßen Verfahrens verwendete Bewegungserfassungseinrichtung kann in oder an der personenseitigen Bewegungssensorik angeordnet sein, wobei die Bewegungserfassungseinrichtung eine Sende- und/oder Empfangseinrichtung zur Übermittlung der personenspezifischen Bewegungsinformation an eine der Vorrichtung zugehörige Sende- und/oder Empfangseinrichtung umfasst, wobei die Sende- und/oder Empfangseinrichtungen zur drahtlosen Kommunikation, insbesondere über ein Drahtlosnetzwerk, ausgebildet sind. Alternativ kann die im Rahmen des erfindungsgemäßen Verfahrens verwendete Bewegungserfassungseinrichtung innerhalb des Kraftfahrzeugs angeordnet sein, wobei die personenseitige Bewegungssensorik eine Sende- und/oder Empfangseinrichtung zur Übermittlung des personenspezifischen Bewegungssignals an eine der Bewegungserfassungseinrichtung zugehörige Sende- und/oder Empfangseinrichtung umfasst, wobei die Sende- und/oder Empfangseinrichtungen zur drahtlosen Kommunikation, insbesondere über ein Drahtlosnetzwerk, ausgebildet sind.

Vorteilhaft wird die personenseitige Bewegungssensorik über eine personenspezifische Identifikationsinformation mit der Vorrichtung registriert, wobei als personenspezifische Identifikationsinformation insbesondere eine auf wenigstens einer bestimmten Geste der Person basierende personenspezifische Bewegungsinformation verwendet wird. Mithin ist es möglich, eine personenseitige Bewegungssensorik über eine entsprechende personenspezifische Identifikationsinformation an der Vorrichtung anzumelden, so dass über die Registrierung respektive Anmeldung auf ein der bestimmten personenseitigen Bewegungssensorik zugeordnetes Personenprofil zugegriffen werden kann.

In diesem Zusammenhang ist es denkbar, dass sich eine bestimmte Person, gegebenenfalls über eine bestimmte Geste, beispielsweise als Fahrer an der Vorrichtung anmeldet. Hierbei dient die Geste als personenspezifische Identifikationsinformation, so dass es beispielsweise möglich ist, dass eine Registrierung einer Person als Fahrer eine andere Bewegung als eine Registrierung einer Person als Beifahrer voraussetzt.

Die personenspezifischen Bewegungsinformationen können in wenigstens einem Speichermittel abgelegt werden, wobei die Einstellung des wenigstens einen Betriebsparameters des wenigstens einen Fahrzeugsystems in Abhängigkeit eines den Vergleich einer aktuellen personenspezifischen Bewegungsinformation mit wenigstens einer in dem Speichermittel abgelegten personenspezifischen Bewegungsinformation betreffenden Vergleichsergebnisses erfolgt.

Im Rahmen des erfindungsgemäßen Verfahrens kann es ferner vorgesehen sein, dass die Vorrichtung eine auf einer bestimmten Geste einer Person basierende personenspezifische Bewegungsinformation einer bestimmten Einstellung eines Betriebsparameters eines Fahrzeugsystems zuordnet.

Bei mehreren innerhalb des Kraftfahrzeugs und/oder des Umfelds des Kraftfahrzeugs befindlichen Personen können den jeweiligen Personen unterschiedliche Rollen zugeordnet werden und die zugeordneten Rollen bei der Einstellung des wenigstens einen Betriebsparameters des wenigstens einen Fahrzeugsystems berücksichtigt werden. Mithin ist es möglich, unterschiedlichen Personen unterschiedliche Rollen zuzuordnen, wobei den unterschiedlichen Rollen insbesondere bestimmte Einstellungen im Zusammenhang mit bestimmten personenspezifischen Bewegungsinformationen zugeordnet sind, so dass beispielsweise für eine die Rolle eines Fahrers einnehmende Person eine bestimmte Handbewegung eine andere Einstellung eines gegebenenfalls anderen Betriebsparameters eines gegebenenfalls anderen Fahrzeugsystems als eine entsprechende Handbewegung einer die Rolle eines Beifahrers einnehmenden Person herbeiführt. Die Zuordnung einer Rolle zu einer Person kann beispielsweise über die oben genannte Registrierung der personenseitigen Bewegungssensorik über eine personenspezifische Identifikationsinformation erfolgen.

Es ist möglich, dass eine auf einer bestimmten Geste einer im Umfeld des geschlossenen Kraftfahrzeugs befindlichen Person basierende Bewegungsinformation wenigstens ein Fahrzeugsystem in Form eines Betätigungssystems wenigstens einer Tür derart eingestellt wird, dass der Person das Innere des Kraftfahrzeugs zugänglich wird. Die bestimmte Geste kann beliebiger Art sein. Dabei ist es jedoch bevorzugt, dass die Geste die Unterschrift der jeweiligen Person abbildet, das heißt, dass die Person ihre Unterschrift quasi in die Luft zeichnet. Hierzu haben Untersuchungen ergeben, dass auch die der jeweiligen Unterschrift zugrundeliegende Bewegung ein hohes Maß an Zuordenbarkeit der jeweiligen Bewegung zu der jeweiligen Person ermöglicht.

Gegebenenfalls ist es möglich, neben der auf der bestimmten Geste basierenden personenspezifischen Bewegungsinformation zusätzlich eine Verifizierung durch die Erfassung eines von der jeweiligen Person getragenen Schlüssels oder dergleichen durchzuführen. Dies bedeutet gleichzeitig auch, dass ein unberechtigter Besitz eines Schlüssels nicht bereits einen Zugang in das Fahrzeuginnere ermöglicht, da hierfür zusätzlich die Durchführung der bestimmten Geste über eine personenseitige Bewegungssensorik erforderlich ist.

Weitere Vorteile, Merkmale und Einzelheiten der Erfindung ergeben sich aus den folgenden Ausführungsbeispielen sowie anhand der Zeichnungen. Dabei zeigen:
- Fig. 1: eine Prinzipdarstellung eines die erfindungsgemäße Vorrichtung umfassenden Kraftfahrzeugs in einer beispielhaften Ausführungsform;
- Fig. 2: eine Prinzipdarstellung eines die erfindungsgemäße Vorrichtung umfassenden Kraftfahrzeugs in einer weiteren beispielhaften Ausführungsform; und
- Fig. 3: mögliche Orte der Anordnung einer erfindungsgemäßen personenseitigen Bewegungssensorik an einer Person.

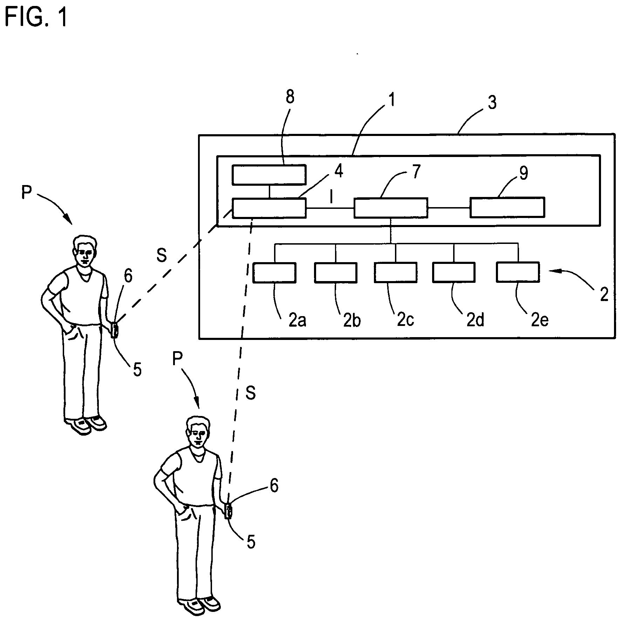

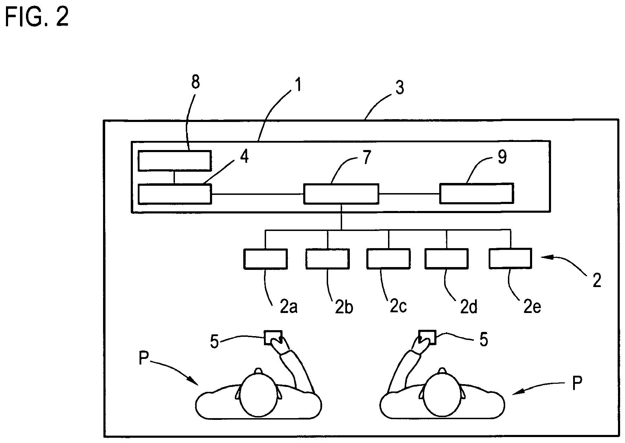

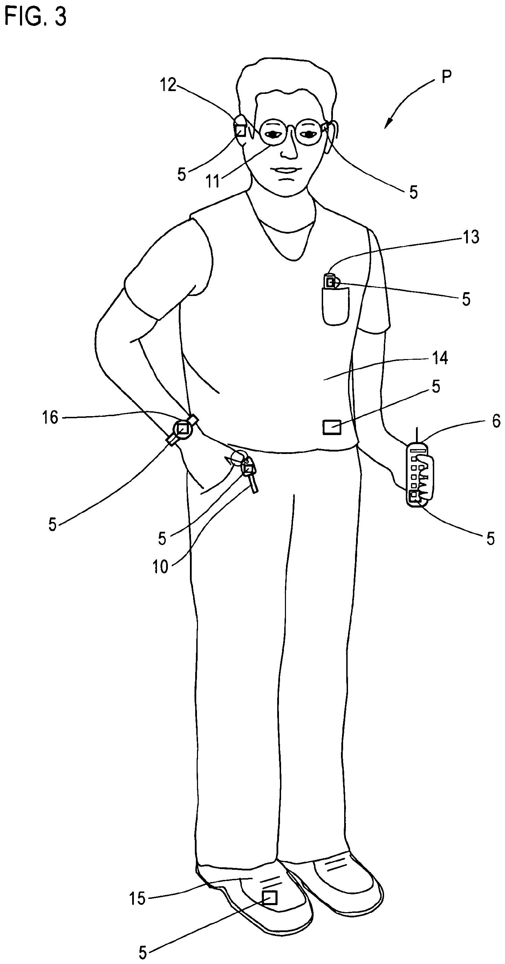

Fig. 1 zeigt eine Prinzipdarstellung eines die erfindungsgemäße Vorrichtung 1 zur Einstellung wenigstens eines Betriebsparameters wenigstens eines Fahrzeugsystems 2 des Kraftfahrzeugs 3 umfassenden Kraftfahrzeugs 3 in einer beispielhaften Ausführungsform. Der Vorrichtung 1 ist eine Bewegungserfassungseinrichtung 4, welche zur Ermittlung der Bewegung einer oder mehrerer innerhalb des Kraftfahrzeugs 3 und/oder des Umfelds des Kraftfahrzeugs 3 befindlichen Personen P ausgebildet ist, zugehörig. Die Person P trägt körpernah, insbesondere an oder benachbart zu einem Körperteil, eine personenseitige Bewegungssensorik 5, welche wenigstens einen (nicht näher gezeigten) Inertialsensor umfasst. Mögliche Orte der Anordnung der Bewegungssensorik 5 werden mit Bezug auf Fig. 3 genannt. Bei den in den Figuren 1, 2 gezeigten Ausführungsformen ist die Bewegungssensorik 5 in ein personenseitiges mobiles Endgerät in Form eines Mobiltelefons 6 integriert.

Die Bewegungserfassungseinrichtung 4 ermittelt personenspezifische Bewegungsinformationen I der Person P aus den von der personenseitigen Bewegungssensorik 5 gelieferten, auf Bewegungen beziehungsweise Gesten der Person P basierenden, die Bewegung der Person P betreffenden personenspezifischen Bewegungssignalen S, welche über eine Datenverbindung respektive ein Drahtlosnetzwerk, das heißt zum Beispiel ein WLAN- oder Bluetooth-Netzwerk, von der personenseitigen Bewegungssensorik 5 an die Bewegungserfassungseinrichtung 4 übermittelt werden. Selbstverständlich verfügen sowohl die Bewegungssensorik 5 als auch die Bewegungserfassungseinrichtung 4 respektive die Vorrichtung 1 hierfür über geeignete, miteinander kommunizierende Sende- und/oder Empfangseinrichtungen (nicht gezeigt).

Anhand der personenspezifischen Bewegungsinformationen I nimmt die Vorrichtung 1 respektive eine dieser zugehörige zentrale Steuereinrichtung 7 Einstellungen bestimmter Betriebsparameter der Fahrzeugsysteme 2 vor. Die im ganzen mit 2 bezeichneten Fahrzeugsysteme können beispielsweise als Kollisionserkennungssystem 2a, Längs- und/oder Querführungssystem 2b, Innenbeleuchtungssystem 2c, Multimediasystem 2d oder Betätigungssystem 2e einer Tür des Kraftfahrzeugs 3 ausgebildet sein. Selbstverständlich sind hierbei auch andere Ausführungsformen denkbar.

Ferner ist der Vorrichtung 1 eine kraftfahrzeugseitige Bewegungssensorik 8 zugehörig. Die Bewegungserfassungseinrichtung 4 ermittelt sonach ebenso eine kraftfahrzeugspezifische Bewegungsinformation anhand wenigstens eines von der kraftfahrzeugseitigen Bewegungssensorik 8 gelieferten kraftfahrzeugspezifischen Bewegungssignals, welches zu einer Ermittlung einer die Bewegung der Person P relativ zu dem Kraftfahrzeug 3 betreffenden relativen personenspezifischen Bewegungsinformation herangezogen wird. Selbstverständlich muss sich die Person P hierfür im Inneren des Kraftfahrzeugs 3 befinden (vgl. Fig. 2). Die relative personenspezifische Bewegungsinformation betrifft sonach im Wesentlichen allein Bewegungen beziehungsweise Gesten der Person P, das heißt sämtliche hierzu gegebenenfalls parallel stattfindenden Bewegungen des Kraftfahrzeugs 3, welche etwa bei Überfahren eines Schlaglochs auftreten, werden gefiltert. Die Vorrichtung 1 stellt dann anhand der relativen personenspezifischen Bewegungsinformation entsprechende Betriebsparameter der Fahrzeugsysteme 2 ein.

Die Vorrichtung 1 umfasst ferner ein Speichermittel 9, in welchem zum Beispiel eine tabellenartige Zuordnung von auf bestimmten Gesten der Person P basierenden personenspezifischen Bewegungsinformationen I zu bestimmten Einstellungen eines Betriebsparameters eines Fahrzeugsystems 2 abgelegt ist.

Das Speichermittel 9 kann insbesondere auch einer Registrierung einer personenseitigen Bewegungssensorik 5 einer Person P über eine personenspezifische Identifikationsinformation mit der Vorrichtung 1 dienen. Zur Registrierung einer personenseitigen Bewegungssensorik 5 mit der Vorrichtung 1 besteht die Möglichkeit, die personenseitige Bewegungssensorik 5 zum Beispiel aktiv über eine Nutzung einer seitens des die Bewegungssensorik 5 aufnehmenden Gegenstands, das heißt zum Beispiel des Mobiltelefons 6, vorgesehenen Software-Applikation von der Person P an der Vorrichtung 1 anzumelden. Im Rahmen der Registrierung kann gleichzeitig eine Rollenzuordnung, das heißt, dass die registrierte beziehungsweise angemeldete Bewegungssensorik 5 zum Beispiel einer als Fahrer agierenden Person P zugeordnet ist, erfolgen.

Alternativ oder zusätzlich ist es möglich, dass die personenspezifische Identifikationsinformation eine auf wenigstens einer bestimmten Geste der Person P basierendes personenspezifisches Bewegungssignal S, das heißt im Weiteren eine personenspezifische Bewegungsinformation I, ist. Mithin kann eine bestimmte Bewegung der Person P, wie beispielsweise das Schreiben ihrer Unterschrift in die Luft, als personenspezifische Identifikationsinformation verwendet werden, so dass bei Ermittlung einer das Schreiben der Unterschrift in die Luft abbildenden personenspezifischen Bewegungsinformation I seitens der Bewegungserfassungseinrichtung 4 eine Registrierung der Person P als Fahrer erfolgt. Selbstverständlich können sich derart auch weitere Personen P an der Vorrichtung 1 registrieren, so dass beispielsweise eine andere, gegebenenfalls auf ein Schreiben einer anderen Unterschrift in die Luft zurückzuführende Bewegung einer Person P als Identifikationsinformation für eine Anmeldung dieser Person P als Beifahrer verwendet wird. Natürlich können auch mehrere personenspezifische Unterschriften betreffende personenspezifische Bewegungsinformationen I in dem Speichermittel 9 hinterlegt sein und bei Erfassung einer diesen entsprechenden Bewegungsinformation I der jeweiligen Bewegungssensorik 5 jeweils zum Beispiel die Rolle als Fahrer zugeordnet werden.

Durch die Anmeldung mehrerer Personen P über diesen jeweils zugeordnete personenseitige Bewegungssensoriken 5 an der Vorrichtung 1 können die Bewegungen, das heißt die damit verbundenen personenspezifischen Bewegungsinformationen I, unterschiedlichen Einstellungen unterschiedlicher Betriebsparameter der Fahrzeugsysteme 2 zugeordnet werden. Wird etwa über die der als Fahrer registrierten Person P zugeordnete Bewegungssensorik 5 ein Bewegen einer Hand nach links oder rechts übertragen, kann die zentrale Steuereinrichtung 7 aus den damit verbundenen personenspezifischen Bewegungsinformationen I Einstellungen des Längs- und/oder Querführungssystems 2b herbeiführen, das heißt es können zum Beispiel Lenkmanöver, Beschleunigungen etc. eingestellt oder vorgenommen werden. Wenn die gleiche Bewegung von einer als Beifahrer registrierten Person P durchgeführt wird, das heißt entsprechende personenspezifische Bewegungssignale S über die dem Beifahrer zugeordnete Bewegungssensorik 5 übertragen und in eine entsprechende personenspezifische Bewegungsinformation I umgewandelt werden, wird zum Beispiel keine Einstellung eines Betriebsparameters des Längs- und/oder Querführungssystems 2b herbeigeführt. Die Durchführung der gleichen Bewegung des Beifahrers kann zu einer Einstellung eines anderen Betriebsparameters eines anderen Fahrzeugsystems 2 führen oder gänzlich unberücksichtigt bleiben.

Sonach ist über die Registrierung der personenseitigen Bewegungssensorik 5 mit der Vorrichtung 1 zum einen eine Zuordnung von Rollen zu den jeweiligen Personen P, welche bei der Einstellung des wenigstens einen Betriebsparameters des wenigstens einen Fahrzeugsystems 2 berücksichtigt werden, und zum anderen eine Zuordnung einer auf einer bestimmten Bewegung beziehungsweise Geste einer Person P basierenden personenspezifischen Bewegungsinformation I zu einer bestimmten Einstellung eines Betriebsparameters möglich.

Anhand der personenspezifischen Bewegungsinformation I kann die Vorrichtung 1 ferner eine den körperlichen Zustand, insbesondere den Wachheitsgrad und/oder Aufmerksamkeitsgrad, der Person P betreffende Information und/oder eine den Fahrertyp der Person P klassifizierende Information ermitteln und bei der Einstellung des wenigstens einen Betriebsparameters des wenigstens einen Fahrzeugsystems 2 berücksichtigen. Wird demnach aus einer auf einer bestimmten Bewegung der Person P, welche zum Beispiel das Einsteigen der Person P in das Kraftfahrzeug 3 sein kann, basierenden personenspezifischen Bewegungsinformation I ermittelt, dass die Person P müde beziehungsweise körperlich beeinträchtigt oder, beispielsweise durch ein Neigen in Richtung des Fonds des Kraftfahrzeugs, vom aktuellen Verkehrsgeschehen abgelenkt ist, können, insbesondere automatisch, entsprechende Einstellungen geeigneter Betriebsparameter geeigneter Fahrzeugsysteme 2 vorgenommen werden. So kann das Kollisionserfassungssystem 2a eine eine mögliche Kollision des Kraftfahrzeugs 3 mit einem Kollisionsobjekt anzeigende Warnung frühzeitiger und/oder intensiver ausgeben.

Insbesondere erfolgt die Ermittlung des körperlichen Zustands der Person P über einen Vergleich einer einer aktuellen Bewegung einer Person P zugrundeliegenden Bewegungsinformation I mit einer als Referenz dienenden, der gleichen Bewegung zugrundeliegenden, in dem Speichermittel 9 hinterlegten Bewegungsinformation I.

Die Klassifizierung des Fahrertyps kann beispielsweise über hektische oder unruhige Bewegungen der als Fahrer agierenden bzw. registrierten Person P, welche ebenso in entsprechenden personenspezifischen Bewegungsinformationen I abgebildet werden, erfolgen. Zweckmäßig kann auch hier ein Abgleich mit entsprechenden Bewegungsmustern entsprechenden Bewegungsinformationen I, welche in dem Speichermittel 9 hinterlegt sind, erfolgen. Wird ein Fahrer anhand seiner Gestik als aggressiv eingestuft, können, wiederum insbesondere automatisch, entsprechende Maßnahmen ergriffen werden, welche eine beruhigende, entspannende Wirkung auf den Fahrer ausüben. So ist es zum Beispiel denkbar, Lautstärkeeinstellungen des Multimediasystems 2d vorzunehmen oder die Innenbeleuchtung über das Innenbeleuchtungssystem 2c angenehmer zu gestalten.

Fig. 2 zeigt eine Prinzipdarstellung eines die erfindungsgemäße Vorrichtung 1 umfassenden Kraftfahrzeugs 3 in einer weiteren beispielhaften Ausführungsform. Der wesentliche Unterschied zu der in Fig. 1 gezeigten Ausführungsform besteht darin, dass die Personen P nicht außerhalb, das heißt im Umfeld des Kraftfahrzeugs 3, sondern innerhalb des Kraftfahrzeugs 3 befindlich sind. Die links dargestellte Person P ist dabei über die dieser zugehörige personenseitige Bewegungssensorik 5 als Fahrer an der Vorrichtung 1 registriert, während die rechts dargestellte Person P über die dieser zugehörige personenseitige Bewegungssensorik 5 als Beifahrer an der Vorrichtung 1 registriert ist. Über die mit den Bewegungen beziehungsweise Gesten der Personen P verbundenen personenspezifischen Bewegungsinformationen I können neben der Einstellung entsprechender Betriebsparameter entsprechender Fahrzeugsysteme 2 auch Erfassungen einer Bedienungsrichtung eines etwa in einer Mittelkonsole befindlichen Betätigungselements (nicht gezeigt), zum Beispiel eines Dreh-/Drückstellers, erfolgen. Wird eine Betätigung des Betätigungselements gleichzeitig mit einer Bewegung, das heißt zum Beispiel einer Dreh- oder Drückbewegung, seitens der beifahrerseitigen Bewegungssensorik 5 erfasst, kann die über die Bedienung des Betätigungselements herbeigeführte Funktion, das heißt beispielsweise eine Einstellung einer Klimaanlage, bereichsbezogen erfolgen, so dass diese nur den Bereich des Beifahrers, das heißt der rechten Person P, betrifft. Denkbar ist es auch, dass bestimmte Bewegungen der der als Beifahrer agierenden Person P zugeordneten Bewegungssensorik 5 nur zu einem Öffnen des beifahrerseitigen Fensters, nicht jedoch anderer Fenster des Kraftfahrzeugs 3 führen.

Gleichermaßen kann die die der Betätigung des Betätigungselements zugrunde liegende personenspezifische Bewegungsinformation I gemäß dem oben erwähnte Prinzip auch Rückschlüsse über den körperlichen Zustand, insbesondere den Wachheitsgrad und/oder Ablenkungsgrad, der jeweiligen Person P liefern.

In einer besonderen Ausführungsform ist es auch denkbar, einem Beifahrer durch Durchführung einer bestimmten Bewegung einen Eingriff in den Fahrbetrieb des Kraftfahrzeugs 3 zu gewähren. Die Bewegung kann beispielsweise eine von dem Beifahrer angedachte Betätigung eines oder eine Annäherung an ein beifahrerseitig üblicherweise nicht vorhandenes Bremspedals sein, wobei entsprechende Bewegungen des Beifahrers beispielsweise über eine in einem Schuh des Beifahrers angeordnete Bewegungssensorik 5 erfasst werden. Dies könnte beispielsweise zur Folge haben, im Rahmen einer Notbremsassistenzfunktion eine Vorkonditionierung einer Bremsanlage auszuführen, wenn zum Beispiel der Fahrer nicht aufmerksam ist, das heißt etwa, wenn über die fahrerseitige Bewegungssensorik 5 Bewegungssignale S übermittelt werden, aus welchen hervorgeht, dass sich der Fahrer gerade in Richtung des Fahrzeughecks wendet.

Alternativ zu den in den Fig. 1, 2 gezeigten Ausführungsformen ist es auch möglich, dass die oder ein Teil der oder eine weitere Bewegungserfassungseinrichtung 4 in oder an der personenseitigen Bewegungssensorik 5 angeordnet ist. Diese weist eine Sende- und/oder Empfangseinrichtung (nicht gezeigt) zur Übermittlung der personenspezifischen Bewegungsinformation I an eine der Vorrichtung 1 zugehörige, das heißt kraftfahrzeugseitig vorgesehene Sende- und/oder Empfangseinrichtung (nicht gezeigt) auf, wobei die Sende- und/oder Empfangseinrichtungen zur drahtlosen Kommunikation, insbesondere über ein Drahtlosnetzwerk, ausgebildet sind. In diesem Fall, kann eine Ermittlung einer personenspezifischen Bewegungsinformation I außerhalb des Kraftfahrzeugs 3 erfolgen, so dass seitens der kraftfahrzeugseitigen Vorrichtung 1 allein eine Zuordnung einer entsprechenden Einstellung eines Betriebsparameters eines Fahrzeugsystems 2 zu der übermittelten personenspezifischen Bewegungsinformation I durchgeführt werden muss. Die außerhalb des Kraftfahrzeugs 3 ermittelte personenspezifische Bewegungsinformation I kann auch nur teilweise erfolgen, so dass in der Vorrichtung 1 selbst eine weitere Bewegungserfassungseinrichtung 4 vorgesehen sein muss, welche die teilweise ermittelten und übermittelten personenspezifischen Bewegungsinformationen I endgültig auswertet respektive interpretiert und in eine entsprechende personenspezifische Bewegungsinformation I umsetzt, welche der Einstellung eines Betriebsparameters zugrunde gelegt wird.

Fig. 3 zeigt mögliche Orte der Anordnung einer erfindungsgemäßen personenseitigen Bewegungssensorik 5 an einer Person P. Ersichtlich kann die personenseitige Bewegungssensorik 5 an unterschiedlichen Orten beziehungsweise Körperteilen der Person P angeordnet sein beziehungsweise getragen werden. Die Anordnung hängt insbesondere davon ab, in was für einen Gegenstand die personenseitige Bewegungssensorik 5 integriert respektive mit was für einem Gegenstand die personenseitige Bewegungssensorik 5 verbunden ist. Die in Fig. 3 gezeigten Möglichkeiten der Anordnung einer personenseitigen Bewegungssensorik 5 sind lediglich beispielhaft.

Gezeigt sind die Integration der personenseitigen Bewegungssensorik 5 in ein Mobiltelefon 6, einen Schlüssel 10, eine Brille 11, ein Hörgerät 12, einen Stift 13, sowie ein Kleidungsoberteil 14 beziehungsweise einen Schuh 15 und eine Armbanduhr 16. Denkbar ist auch die Integration einer entsprechenden Bewegungssensorik 5 in einen Gürtel oder andere, am Körper der Person P getragene Accessoires wie etwa Schmuckgegenstände, wie zum Beispiel Ringe, Ohrringe, Manschettenknöpfe, Handschuhe oder dergleichen.

## Patentansprüche

1. Vorrichtung (1) zur Einstellung wenigstens eines Betriebsparameters wenigstens eines Fahrzeugsystems (2) eines Kraftfahrzeugs (3), wobei die Vorrichtung (1) wenigstens eine Bewegungserfassungseinrichtung (4) zur Ermittlung der Bewegung wenigstens einer innerhalb oder im Umfeld des Kraftfahrzeugs (3) befindlichen Person (P) umfasst, welche Bewegungserfassungseinrichtung (4) zur Ermittlung wenigstens einer personenspezifischen Bewegungsinformation (I) anhand wenigstens eines von einer personenseitigen Bewegungssensorik (5) gelieferten, die Bewegung der Person (P) betreffenden personenspezifischen Bewegungssignals (S) ausgebildet ist, wobei
- die Bewegungserfassungseinrichtung (4) in oder an der personenseitigen Bewegungssensorik (5) angeordnet ist, wobei die Bewegungserfassungseinrichtung (4) eine Sende- und/oder Empfangseinrichtung zur Übermittlung der personenspezifischen Bewegungsinformation (I) an eine der Vorrichtung (1) zugehörige Sende- und/oder Empfangseinrichtung umfasst, wobei die Sende- und/oder Empfangseinrichtungen zur drahtlosen Kommunikation ausgebildet sind, oder
- die Bewegungserfassungseinrichtung (4) innerhalb des Kraftfahrzeugs (3) angeordnet ist, wobei die personenseitige Bewegungssensorik (5) eine Sende- und/oder Empfangseinrichtung zur Übermittlung des personenspezifischen Bewegungssignals (S) an eine der Bewegungserfassungseinrichtung (4) zugehörige Sende- und/oder Empfangseinrichtung umfasst, wobei die Sende- und/oder Empfangseinrichtungen zur drahtlosen Kommunikation ausgebildet sind,
wobei die Vorrichtung (1) anhand der personenspezifischen Bewegungsinformation (I) zur Einstellung des wenigstens einen Betriebsparameters des wenigstens einen Fahrzeugsystems (2) ausgebildet ist, wobei die Vorrichtung (1) ein Speichermittel (9) umfasst, in welchem zu bestimmten personenspezifischen Bewegungsinformationen (I) bestimmte Einstellungen eines Betriebsparameters eines Fahrzeugsystems (2) zugeordnet sind, wobei die Vorrichtung (1) bei mehreren innerhalb des Kraftfahrzeugs (3) und/oder des Umfelds des Kraftfahrzeugs (3) befindlichen und jeweils mit einer Bewegungssensorik (5) ausgestatteten Personen (P) zur Zuordnung unterschiedlicher Rollen zu den jeweiligen Personen (P) und zur Berücksichtigung der zugeordneten Rollen bei der Einstellung des wenigstens einen Betriebsparameters des wenigstens einen Fahrzeugsystems (2) ausgebildet ist.

2. Vorrichtung nach Anspruch 1,
**dadurch gekennzeichnet,**
**dass** die personenseitige Bewegungssensorik (5) wenigstens einen Inertialsensor umfasst.

3. Vorrichtung nach Anspruch 1 oder 2,
**dadurch gekennzeichnet,**
**dass** die personenseitige Bewegungssensorik (5) körpernah benachbart zu der jeweiligen Person (P), insbesondere an oder benachbart zu einem Körperteil der Person (P), angeordnet oder anordenbar ist.

4. Vorrichtung nach einem der vorangehenden Ansprüche,
**dadurch gekennzeichnet,**
**dass** die personenseitige Bewegungssensorik (5) in ein Mobiltelefon (6) und/oder einen Schlüssel (10) und/oder eine Brille (11) und/oder einen Stift (13) und/oder ein Kleidungsstück (14) und/oder eine Uhr (16) und/oder ein Schmuckstück der Person (P) integriert und/oder mit einem Mobiltelefon (6) und/oder einem Schlüssel (10) und/oder einer Brille (11) und/oder einem Stift (13) und/oder einem Kleidungsstück (14) und/oder einer Uhr (16) und/oder einem Schmuckstück der Person (P) verbunden ist.

5. Vorrichtung nach einem der vorangehenden Ansprüche,
**dadurch gekennzeichnet,**
**dass** die Vorrichtung (1) zur Ermittlung einer den körperlichen Zustand, insbesondere den Wachheitsgrad und/oder Aufmerksamkeitsgrad, der Person (P) betreffenden Information und/oder einer den Fahrertyp der Person (P) klassifizierenden Information aus der personenspezifischen Bewegungsinformation (I) und zur Berücksichtigung der den körperlichen Zustand der Person betreffenden Information und/oder der den Fahrertyp der Person klassifizierenden Information bei der Einstellung des wenigstens einen Betriebsparameters des wenigstens einen Fahrzeugsystems (2) ausgebildet ist.

6. Vorrichtung nach Anspruch 5,
**dadurch gekennzeichnet,**
**dass** die Vorrichtung (1) zur Ermittlung der den körperlichen Zustand, insbesondere den Wachheitsgrad und/oder Aufmerksamkeitsgrad, der Person (P) betreffenden Information und/oder der den Fahrertyp der Person (P) klassifizierenden Information anhand der personenspezifischen Bewegungsinformation (I) aus dem beim Einsteigen der Person (P) in das Kraftfahrzeug (3) gelieferten personenspezifischen Bewegungssignal (S) ausgebildet ist.

7. Vorrichtung nach einem der vorangehenden Ansprüche,
**dadurch gekennzeichnet,**
**dass** sie ferner wenigstens eine kraftfahrzeugseitige Bewegungssensorik (8) umfasst, wobei die Bewegungserfassungseinrichtung (4) zur Ermittlung einer kraftfahrzeugspezifischen Bewegungsinformation anhand wenigstens eines von der kraftfahrzeugseitigen Bewegungssensorik (8) gelieferten kraftfahrzeugspezifischen Bewegungssignals und unter Berücksichtigung des kraftfahrzeugseitigen Bewegungssignals zur Ermittlung einer die Bewegung der Person (P) relativ zu dem Kraftfahrzeug (3) betreffenden relativen personenspezifischen Bewegungsinformation (I) ausgebildet ist, wobei die Vorrichtung (1) anhand der relativen personenspezifischen Bewegungsinformation (I) zur Einstellung des wenigstens einen Betriebsparameters des wenigstens einen Fahrzeugsystems (2) ausgebildet ist.

8. Vorrichtung nach einem der vorangehenden Ansprüche,
**dadurch gekennzeichnet,**
**dass** die Sende- und/oder Empfangseinrichtungen zur drahtlosen Kommunikation über ein Drahtlosnetzwerk ausgebildet sind.

9. Vorrichtung nach einem der vorangehenden Ansprüche,
**dadurch gekennzeichnet,**
**dass** sie zur Zuordnung einer auf einer bestimmten Geste einer Person (P) basierenden personenspezifischen Bewegungsinformation (I) zu einer bestimmten Einstellung eines Betriebsparameters eines Fahrzeugsystems (2) ausgebildet ist.

10. Vorrichtung nach einem der vorangehenden Ansprüche,
**dadurch gekennzeichnet,**
**dass** die personenseitige Bewegungssensorik (5) über eine personenspezifische Identifikationsinformation mit der Vorrichtung (1) registrierbar ist.

11. Vorrichtung nach Anspruch 10,
**dadurch gekennzeichnet,**
**dass** die personenspezifische Identifikationsinformation eine auf wenigstens einer bestimmten Geste der Person (P) basierende personenspezifische Bewegungsinformation (I) ist.

12. Vorrichtung nach einem der vorangehenden Ansprüche,
**dadurch gekennzeichnet,**
**dass** sie ein Speichermittel (9) umfasst, in welchem zu bestimmten personenspezifischen Bewegungsinformationen (I) ablegbar sind.

13. Vorrichtung nach einem der vorangehenden Ansprüche,
**dadurch gekennzeichnet,**
**dass** das wenigstens eine Fahrzeugsystem (2) ein Fahrerassistenzsystem, insbesondere ein Multimediasystem (2d) und/oder ein Fahrwerkseinstellungssystem und/oder ein Längs- und/oder Querführungssystem (2b), und/oder eine Klimaanlage und/oder ein Innenbeleuchtungssystem (2c) und/oder ein Betätigungssystem wenigstens einer Tür, eines Fensters, eines Verdecks und/oder wenigstens ein System zur Einstellung wenigstens einer Sitzposition ist.

14. Verfahren zur Einstellung wenigstens eines Betriebsparameters wenigstens eines Fahrzeugsystems (2) eines Kraftfahrzeugs (3),
**dadurch gekennzeichnet,**
**dass** über wenigstens eine personenseitige Bewegungssensorik (5) wenigstens einer innerhalb oder im Umfeld des Kraftfahrzeugs (3) befindlichen Person (P) wenigstens ein die Bewegung der Person (P) betreffendes personenspezifisches Bewegungssignal (S) an eine Bewegungserfassungseinrichtung (4) übermittelt wird, welche Bewegungserfassungseinrichtung (4) anhand des personenspezifischen Bewegungssignals (S) eine personenspezifische Bewegungsinformation ermittelt, wobei
- die Bewegungserfassungseinrichtung (4) in oder an der personenseitigen Bewegungssensorik (5) angeordnet ist, wobei die Bewegungserfassungseinrichtung (4) eine Sende- und/oder Empfangseinrichtung zur Übermittlung der personenspezifischen Bewegungsinformation (I) an eine einer Vorrichtung (1) zur Einstellung wenigstens eines Betriebsparameters wenigstens eines Fahrzeugsystems (2) eines Kraftfahrzeugs (3), insbesondere der Vorrichtung (1) nach Anspruch 1, zugehörige Sende- und/oder Empfangseinrichtung umfasst, wobei die Sende- und/oder Empfangseinrichtungen zur drahtlosen Kommunikation ausgebildet sind oder
- die Bewegungserfassungseinrichtung (4) innerhalb des Kraftfahrzeugs (3) angeordnet ist, wobei die personenseitige Bewegungssensorik (5) eine Sende- und/oder Empfangseinrichtung zur Übermittlung des personenspezifischen Bewegungssignals (S) an eine der Bewegungserfassungseinrichtung (4) zugehörige Sende- und/oder Empfangseinrichtung umfasst, wobei die Sende- und/oder Empfangseinrichtungen zur drahtlosen Kommunikation ausgebildet sind,
wobei aus der Bewegungsinformation (I) von der Vorrichtung (1) eine Einstellung des wenigstens einen Betriebsparameters des wenigstens einen Fahrzeugsystems (2) des Kraftfahrzeugs (3) erfolgt, wobei die Vorrichtung (1) ein Speichermittel (9) umfasst, in welchem zu bestimmten personenspezifischen Bewegungsinformationen (I) bestimmte Einstellungen eines Betriebsparameters eines Fahrzeugsystems (2) zugeordnet werden, wobei von der Vorrichtung (1) bei mehreren innerhalb des Kraftfahrzeugs (3) und/oder des Umfelds des Kraftfahrzeugs (3) befindlichen und jeweils mit einer Bewegungssensorik (5) ausgestatteten Personen (P) eine Zuordnung unterschiedlicher Rollen zu den jeweiligen Personen (P) und eine Berücksichtigung der zugeordneten Rollen bei der Einstellung des wenigstens einen Betriebsparameters des wenigstens einen Fahrzeugsystems (2) erfolgt.

## Claims

1. Device (1) for setting at least one operating parameter of at least one vehicle system (2) in a motor vehicle (3), wherein the device (1) comprises at least one movement detection apparatus (4) for detecting the movement of at least one person (P) being within or in the environment of the motor vehicle (3), which movement detection apparatus (4) is designed to detect at least one item of person-specific movement information (I) using at least one movement signal (S) which is delivered from a person-side movement sensor mechanism (5) and which is person specific regarding the movement of the person (P), wherein
- the movement detection apparatus (4) is disposed in or at the person-side movement sensor mechanism (5), wherein the movement detection apparatus (4) comprises a transmitting and/or receiving device for transferring the person-specific movement information (I) to a transmitting and/or receiving device belonging to the device (1), wherein the transmitting and/or receiving devices are designed for wireless communication, or
- the movement detection apparatus (4) is disposed within the motor vehicle (3), wherein the person-side movement sensor mechanism (5) comprises a transmitting and/or receiving device for transferring the person-specific movement signal (S) to a transmitting and/or receiving device belonging to the movement detection apparatus (4), wherein the transmitting and/or receiving devices are designed for wireless communication,
wherein the device (1) is designed to use the person-specific movement information (I) for setting the at least one operating parameter of the at least one vehicle system (2), wherein the device (1) comprises a storage means (9) in which specific settings of an operating parameter of a vehicle system (2) are assigned to specific person-specific items of movement information (I), wherein, when a plurality of persons (P) are situated within the motor vehicle (3) and/or within the environment of the motor vehicle (3) and are each equipped with a movement sensor mechanism (5), the device (1) is designed to assign different roles to the respective persons (P) and to take into account the assigned roles when setting the at least one operating parameter of the at least one vehicle system (2).

2. Device according to claim 1,
**characterised in**
**that** the person-side movement sensor mechanism (5) comprises at least one inertial sensor.

3. Device according to claim 1 or 2,
**characterised in**
**that** the person-side movement sensor mechanism (5) is disposed or can be disposed near to the body adjacent to the respective person (P), particularly at or adjacent to a body part of the person (P).

4. Device according to one of the preceding claims,
**characterised in**
**that** the person-side movement sensor mechanism (5) is integrated into a mobile telephone (6) and/or a key (10) and/or a pair of spectacles (11) and/or a pen (13) and/or an item of clothing (14) and/or a watch (16) and/or an item of jewellery belonging to the person (P) and/or is connected with a mobile telephone (6) and/or a key (10) and/or a pair of spectacles (11) and/or a pen (13) and/or an item of clothing (14) and/or a watch (16) and/or an item of jewellery belonging to the person (P).

5. Device according to one of the preceding claims,
**characterised in**
**that** the device (1) is designed to detect from the person-specific movement information (I) an item of information regarding the physical state, in particular the degree of wakefulness and/or degree of attentiveness, of the person (P) and/or an item of information classifying the driver type of the person (P), and to take into consideration the information concerning the physical state of the person and/or the information classifying the driver type of the person when setting the at least one operating parameter of the at least one vehicle system (2).

6. Device according to claim 5,
**characterised in**
**that** the device (1) is designed to detect the information concerning the physical state, in particular the degree of wakefulness and/or the degree of attentiveness, of the person (P) and/or the information classifying the driver type of the person (P) using the person specific movement information (I) out of the person specific movement signal (S) which is delivered when the person (P) gets into the motor vehicle (3).

7. Device according to one of the preceding claims,
**characterised in**
**that** it additionally comprises at least one vehicle-side movement sensor mechanism (8), wherein the movement detection device (4) is designed to detect an item of motor vehicle specific movement information using at least one motor vehicle specific movement signal delivered from the motor vehicle side movement sensor mechanism (8), and taking into account the motor vehicle side movement signal to detect an item of relative person-specific movement information (I) concerning the movement of the person (P) relative to the motor vehicle (3), wherein the device (1) is designed to set the at least one operating parameter of the at least one vehicle system (2) using the item of relative person-specific movement information (I).

8. Device according to one of the preceding claims,
**characterised in**
**that** the transmitting and/or receiving devices are designed for wireless communication via a wireless network.

9. Device according to one of the preceding claims,
**characterised in**
**that** it is designed to assign an item of person-specific movement information (I) based on a specific gesture of a person (P) to a specific setting of an operating parameter of a vehicle system (2).

10. Device according to one of the preceding claims,
**characterised in**
**that** the person-side movement sensor mechanism (5) can be registered with the device (1) via an item of person-specific identification information.

11. Device according to claim 10,
**characterised in**
**that** the item of person-specific identification information is an item of person-specific identification information (I) based on at least one specific gesture of the person (P).

12. Device according to one of the preceding claims,
**characterised in**
**that** it comprises a storage means (9) in which to specific items of person-specific movement information (I) can be stored.

13. Device according to one of the preceding claims,
**characterised in**
**that** the at least one vehicle system (2) is a driver assistance system, in particular a multimedia system (2d) and/or a chassis adjustment system and/or a longitudinal and/or transverse guidance system (2b) and/or an air conditioning system and/or an interior lighting system (2c) and/or an operating system of at least one door, one window, one cover and/or at least one system for adjusting at least one seat position.

14. Method for adjusting at least one operating parameter of at least one vehicle system (2) of a motor vehicle (3),
**characterised in**
**that** via at least one person-side movement sensor mechanism (5) of at least one person (P) situated within or in the environment of the motor vehicle (3), at least one person-specific movement signal (S) concerning the movement of the person (P) is transmitted to a movement detection apparatus (4), which movement detection apparatus (4) detects a person-specific item of movement information using the person-specific movement signal (S), wherein
- the movement detection apparatus (4) is disposed in or at the person-side movement sensor mechanism (5), wherein the movement detection apparatus (4) comprises a transmitting and/or receiving device for transferring the person-specific movement information (I) to a transmitting and/or receiving device belonging to a device (1) for setting at least one operating parameter of at least one vehicle system (2) of a motor vehicle (3), in particular the device (1) according to claim 1, wherein the transmitting and/or receiving devices are designed for wireless communication or
- the movement detection apparatus (4) is disposed within the motor vehicle (3), wherein the person-side movement sensor mechanism (5) comprises a transmitting and/or receiving device for transmitting the person-specific movement signal (S) to a transmitting and/or receiving device belonging to the movement detection apparatus (4), wherein the transmitting and/or receiving devices are designed for wireless communication,
wherein from the movement information (I) from the device (1) results a setting of the at least one operating parameter of the at least one vehicle system (2) of the motor vehicle (3), wherein the device (1) comprises a storage means (9) in which specific settings of an operating parameter of a vehicle system (2) are assigned to specific person-specific items of movement information (I), wherein when a plurality of persons (P) is situated within the motor vehicle (3) and/or within the environment of the motor vehicle (3) and are each equipped with a movement sensor mechanism (5), the device (1) assigns different roles to the respective persons (P) and takes into account the assigned roles when setting the at least one operating parameter of the at least one vehicle system (2).

## Revendications

1. Dispositif (1) servant à régler au moins un paramètre de fonctionnement d'au moins un système de véhicule (2) d'un véhicule automobile (3), dans lequel le dispositif (1) comprend au moins un système de détection de mouvements (4) servant à déterminer le mouvement d'au moins une personne (P) se trouvant à l'intérieur ou dans le champ environnant du véhicule automobile (3), lequel système de détection de mouvements (4) est réalisé pour déterminer au moins une information de mouvement (I) spécifique à la personne à l'aide d'au moins un signal de mouvement (S) spécifique à la personne fourni par un équipement de détection de mouvements (5) du côté de la personne, concernant le mouvement de la personne (P), dans lequel
- le système de détection de mouvements (4) est disposé dans ou au niveau de l'équipement de détection de mouvements (5) du côté de la personne, dans lequel le système de détection de mouvements (4) comprend un système d'envoi et/ou de réception servant à transmettre l'information de mouvement (I) spécifique à la personne à un système d'envoi et/ou de réception associé au dispositif (1), dans lequel les systèmes d'envoi et/ou de réception sont réalisés aux fins de la communication sans fil, ou
- le système de détection de mouvements (4) est disposé à l'intérieur du véhicule automobile (3), dans lequel l'équipement de détection de mouvements (5) du côté de la personne comprend un système d'envoi et/ou de réception servant à transmettre le signal de mouvement (S) spécifique à la personne à un système d'envoi et/ou de réception associé au système de détection de mouvements (4), dans lequel les systèmes d'envoi et/ou de réception sont réalisés aux fins de la communication sans fil,
dans lequel le dispositif (1) est réalisé pour régler l'au moins un paramètre de fonctionnement de l'au moins un système de véhicule (2) à l'aide de l'information de mouvement (I) spécifique à la personne, dans lequel le dispositif (1) comprend un moyen de mémorisation (9), dans lequel certains réglages d'un paramètre de fonctionnement d'un système de véhicule (2) sont associés à certaines informations de mouvement (I) spécifiques à la personne, dans lequel le dispositif (1) est réalisé pour associer différents rôles aux personnes (P) respectives et pour tenir compte des rôles associés lors du réglage de l'au moins un paramètre de fonctionnement de l'au moins un système de véhicule (2) pour plusieurs personnes (P) se trouvant à l'intérieur du véhicule automobile (3) et/ou du champ environnant du véhicule automobile (3) et équipées respectivement d'un équipement de détection de mouvements (5).

2. Dispositif selon la revendication 1,
**caractérisé en ce**
**que** l'équipement de détection de mouvements (5) du côté de la personne comprend au moins un capteur inertiel.

3. Dispositif selon la revendication 1 ou 2,
**caractérisé en ce**
**que** l'équipement de détection de mouvements (5) du côté de la personne est disposé ou peut être disposé à proximité du corps de manière adjacente à la personne (P) respective, en particulier au niveau d'une partie corporelle de la personne (P) ou de manière adjacente à cette dernière.

4. Dispositif selon l'une quelconque des revendications précédentes,
**caractérisé en ce**
**que** l'équipement de détection de mouvements (5) du côté de la personne est intégré dans un téléphone mobile (6) et/ou dans une clé (10) et/ou dans des lunettes (11) et/ou dans un crayon (13) et/ou dans une pièce de vêtement (14) et/ou dans une montre (16) et/ou dans une pièce de joaillerie de la personne (P) et/ou est relié à un téléphone mobile (6) et/ou à une clé (10) et/ou à des lunettes (11) et/ou à un crayon (13) et/ou à une pièce de vêtement (14) et/ou à une montre (16) et/ou à une pièce de joaillerie de la personne (P).

5. Dispositif selon l'une quelconque des revendications précédentes,
**caractérisé en ce**
**que** le dispositif (1) est réalisé pour déterminer une information concernant l'état corporel, en particulier le degré d'éveil et/ou le degré de vigilance, de l'information concernant la personne (P) et/ou une information classant le type de conducteur de la personne (P) issue de l'information de mouvement (I) spécifique à la personne et pour tenir compte de l'information concernant l'état corporel de la personne et/ou de l'information classant le type de conducteur de la personne lors du réglage de l'au moins un paramètre de fonctionnement de l'au moins un système de véhicule (2).

6. Dispositif selon la revendication 5,
**caractérisé en ce**
**que** le dispositif (1) est réalisé pour déterminer l'information concernant l'état corporel, en particulier le degré d'éveil et/ou le degré de vigilance, de la personne (P) et/ou l'information classant le type de conducteur de la personne (P) à l'aide de l'information de mouvement (I) spécifique à la personne issu du signal de mouvement (S) spécifique à la personne fourni lors de la montée de la personne (P) dans le véhicule automobile (3).

7. Dispositif selon l'une quelconque des revendications précédentes,
**caractérisé en ce**
**qu'**il comprend en outre au moins un équipement de détection de mouvements (8) du côté du véhicule automobile, dans lequel le système de détection de mouvements (4) est réalisé pour déterminer une information de mouvement spécifique au véhicule automobile à l'aide d'au moins un signal de mouvement spécifique au véhicule automobile fourni par l'équipement de détection de mouvements (8) du côté du véhicule automobile et, en tenant compte du signal de mouvement du côté du véhicule automobile, pour déterminer une information de mouvement (I) spécifique à la personne relative concernant le mouvement de la personne (P) par rapport au véhicule automobile (3), dans lequel le dispositif (1) est réalisé pour régler l'au moins un paramètre de fonctionnement de l'au moins un système de véhicule (2) à l'aide de l'information de mouvement (I) spécifique à la personne relative.

8. Dispositif selon l'une quelconque des revendications précédentes,
**caractérisé en ce**
**que** les systèmes d'envoi et/ou de réception sont réalisés aux fins de la communication sans fil par l'intermédiaire d'un réseau sans fil.

9. Dispositif selon l'une quelconque des revendications précédentes,
**caractérisé en ce**
**qu'**il est réalisé pour associer une information de mouvement (I) spécifique à la personne se basant sur un certain geste d'une personne (P) à un certain réglage d'un paramètre de fonctionnement d'un système de véhicule (2).

10. Dispositif selon l'une quelconque des revendications précédentes,
**caractérisé en ce**
**que** l'équipement de détection de mouvements (5) du côté de la personne peut être enregistré par l'intermédiaire d'une information d'identification spécifique à la personne avec le dispositif (1).

11. Dispositif selon la revendication 10,
**caractérisé en ce**
**que** l'information d'identification spécifique à la personne est une information de mouvement (I) spécifique à la personne se basant sur au moins un certain geste de la personne (P).

12. Dispositif selon l'une quelconque des revendications précédentes,
**caractérisé en ce**
**qu'**il comprend un moyen de mémorisation (9), dans lequel à certaines informations de mouvement (I) spécifiques à la personne peuvent être enregistrées.

13. Dispositif selon l'une quelconque des revendications précédentes,
**caractérisé en ce**
**que** l'au moins un système de véhicule (2) est un système d'assistance au conducteur, en particulier un système multimédia (2d) et/ou un système de réglage de train de roulement et/ou un système de guidage longitudinal et/ou transversal (2b), et/ou une installation de climatisation et/ou un système d'éclaire intérieur (2c) et/ou un système d'actionnement d'au moins une portière, d'une fenêtre, d'une capote et/ou au moins un système servant à régler au moins une position de siège.

14. Procédé servant à régler au moins un paramètre de fonctionnement d'au moins un système de véhicule (2) d'un véhicule automobile (3),
**caractérisé en ce**
**qu'**est transmis par l'intermédiaire d'au moins un équipement de détection de mouvements (5) du côté de la personne d'au moins une personne (P) se trouvant à l'intérieur ou dans le champ environnant du véhicule automobile (3), au moins un signal de mouvement (S) spécifique à la personne concernant le mouvement de la personne (P) à un système de détection de mouvements (4), lequel système de détection de mouvements (4) détermine à l'aide du signal de mouvement (S) spécifique à la personne une information de mouvement spécifique à la personne, dans lequel
- le système de détection de mouvements (4) est disposé dans ou au niveau de l'équipement de détection de mouvements (5) du côté de la personne, dans lequel le système de détection de mouvements (4) comprend un système d'envoi et/ou de réception servant à transmettre l'information de mouvement (I) spécifique à la personne à un système d'envoi et/ou de réception associé à un dispositif (1) servant à régler au moins un paramètre de fonctionnement d'au moins un système de véhicule (2) d'un véhicule automobile (3), en particulier du dispositif (1) selon la revendication 1, dans lequel les systèmes d'envoi et/ou de réception sont réalisés aux fins de la communication sans fil, ou
- le système de détection de mouvements (4) est disposé à l'intérieur du véhicule automobile (3), dans lequel l'équipement de détection de mouvements (5) du côté de la personne comprend un système d'envoi et/ou de réception servant à transférer le signal de mouvement (S) spécifique à la personne à un système d'envoi et/ou de réception associé au système de détection de mouvements (4), dans lequel les systèmes d'envoi et/ou de réception sont réalisés aux fins de la communication sans fil,
dans lequel un réglage de l'au moins un paramètre de fonctionnement de l'au moins un système de véhicule (2) du véhicule automobile (3) est effectué à partir de l'information de mouvement (I) provenant du dispositif (1), dans lequel le dispositif (1) comprend un moyen de mémorisation (9), dans lequel certains réglages d'un paramètre de fonctionnement d'un système de véhicule (2) sont associés à certaines informations de mouvement (I) spécifiques à la personne, dans lequel une association de différents rôles aux personnes (P) respectives et une prise en compte des rôles associés sont effectuées lors du réglage de l'au moins un paramètre de fonctionnement de l'au moins un système de véhicule (2) depuis le dispositif (1) pour plusieurs personnes (P) se trouvant à l'intérieur du véhicule automobile (3) et/ou du champ environnant du véhicule automobile (3) et équipées respectivement d'un mécanisme de détection de mouvements (5).
